(19) Europäisches Patentamt

European Patent Office

Office européen des brevets

(11) **EP 3 603 280 B1**

(12) **EUROPEAN PATENT SPECIFICATION**

(45) Date of publication and mention
of the grant of the patent:
**01.05.2024 Bulletin 2024/18**

(21) Application number: **17715415.0**

(22) Date of filing: **28.03.2017**

(51) International Patent Classification (IPC):
*H04W 16/10* ⁽²⁰⁰⁹·⁰¹⁾    *H04W 72/121* ⁽²⁰²³·⁰¹⁾

(52) Cooperative Patent Classification (CPC):
**H04W 72/121; H04W 16/10**

(86) International application number:
**PCT/EP2017/057245**

(87) International publication number:
**WO 2018/177506 (04.10.2018 Gazette 2018/40)**

(54) **TECHNIQUE FOR ALLOCATING RADIO RESOURCES IN A RADIO ACCESS NETWORK**

VERFAHREN ZUR ZUWEISUNG VON FUNKRESSOURCEN IN EINEM
FUNKZUGANGSNETZWERK

TECHNIQUE D'ATTRIBUTION DE RESSOURCES RADIO DANS UN RÉSEAU D'ACCÈS RADIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.02.2020 Bulletin 2020/06**

(73) Proprietor: **Telefonaktiebolaget LM Ericsson
(publ)
164 83 Stockholm (SE)**

(72) Inventor: **ANSARI, Junaid
90768 Fürth (DE)**

(74) Representative: **Ericsson
Patent Development
Torshamnsgatan 21-23
164 80 Stockholm (SE)**

(56) References cited:
**US-A1- 2010 202 391    US-A1- 2011 070 838
US-A1- 2013 194 950**

## Description

### Technical Field

The present disclosure generally relates to a technique for allocating radio resources in a radio access network. More specifically, and without limitation, methods and devices are provided for allocating and assigning radio resources in a radio access network, in particular for industrial automation applications.

### Background

A key objective of the next generation of cellular network standard, 5G, is to support very high reliability and low latency machine-type communication, i.e., Critical-MTC or Ultra Reliable Low Latency Communication (URLLC). Industrial automation applications (also referred to as Industrial Internet of Things, IIOT) demand highly reliable communication with extremely low latency bounds. Industrial automation and control typically involves sensors that report data to a Programmable Logic Controller (PLC). Based on the sensory data, the PLC instructs an actuator, e.g. a robot, to perform a certain action.

Today's industrial automation applications mainly rely on fieldbus standards. Compared to wired communication, wireless communication can offer several advantages for industrial automation applications, such as faster installation, ease of maintenance, flexibility and extensibility, substantially lower cable damages resulting from moving machine parts, and effectively overall reduced operational costs. Furthermore, some crossing paths or freely moving or rotating devices are enabled only by wireless communication.

While wireless communication brings several benefits to automation applications, none of the existing wireless technologies is capable of satisfying the ultra-low latency and very high reliability communication demands. Enabling communication requirements for mission-critical communication in industrial applications is an important aspect of the future 5G cellular communication system.

For a wireless communication system, one of the key limiting conditions is the system capacity, which is dependent upon the available spectrum bandwidth. With a large number of field devices such as sensors and actuators (e.g., robots) in a factory hall and their varying traffic needs (e.g. packet sizes, inter-arrival time of data packets, priority, real-time requirements, etc.), deploying only a single base station (BS) serving or managing a large number of devices in a factory hall may be impractical due to capacity limitations, i.e., with a certain spectrum bandwidth only a certain limited number of devices can be supported. In other words, dedicated radio resources assigned to a subset of field devices could become a bottleneck in meeting their latency and reliability requirements.

In a multi-cell deployment scenario for industrial automation, the radio resource assignment must be carried out in a manner to satisfy the Quality of Service (QoS) requirements of all the devices. If devices cause spectral interference to each other, the stringent QoS requirements cannot be satisfied. In contrast to the traditional mobile broadband applications, where the wireless communication system can leverage from inter-cell-interference-coordination (ICIC) schemes and its variants, industrial automation applications usually do not have the latency budget to benefit from these schemes. The propagation environment in industrial applications can be very harsh due to strong multipath effects originating from lots of metallic surface, moving machine parts, mobility and high density of devices.

Thus, to date none of the existing wireless technologies has been able to satisfy the communication requirements of devices in industrial automation applications. While a few early prototypes have been demonstrated to achieve low-latency and high reliability communication at the link level, architectures and methods to manage resources for a large number of devices in a factory hall have not been developed. Without such an architecture, resource management and interference coordination schemes, wireless technology for mission-critical communication in industrial applications would not become practically viable.

However, existing wireless technologies have been designed to handle broadband traffic. For the real-time communication requirements with extremely low latency, existing wireless technologies and resource allocation schemes are unsuitable. Without coordination and radio resource management, an arbitrary use of the wireless spectrum across multiple cells can lead to inter-cell interference and degradation in QoS. However, due to communication demands with stringent constraints on latency and extremely high reliability, the classical inter cell interference schemes such as ICIC, elCIC and FelCIC are not suitable for industrial automation applications.

Document US 2011/0070838 A1 discloses a method which may include receiving spectrum occupancy data regarding spectrum occupancy in a radio frequency environment, generating, with a processor, spectrum information regarding a plurality of transmission options for a transmitter based on the spectrum occupancy data, and providing the spectrum information to the transmitter.

Document US 2013/0194950 A1 discloses systems and methods for managing and/or improving interference in cells. For example, a partial-band Almost Blank Subframe (PB-ABS) and/or a spatial Almost Blank Subframe (SABS) may be provided for coordinating communication within networks with smaller and larger cells (e.g. pico or macro cells).

A PB-ABS may provide a dimension (e.g. frequency) that may be used to define a region and/or particular resources (e.g. resource blocks) reserved for pico cell operations or transmissions and a region or other resources (e.g. not those reserved for pico cell operations) available for macro cell operations or transmissions.

Document US 2010/0202391 A1 describes a communication system with first and second access points; the first access point sends a request for resource allocation to the second access point. The second access point obtains the request for the resource allocation and determines a potential resource allocation for the first access point to facilitate the communication of the first access point with one or more wireless devices. It is disclosed that the second access point allocates resources determined in the potential resource allocation to the first access point based on the request received from the first access point.

## Summary

Accordingly, there is a need for a technique of allocating radio resources in a radio access network that is also suitable for industrial automation applications.

Alternatively or in addition, there is need for a technique of allocating radio resources satisfying low latency and high reliability communication demands, particularly for operation-critical communication in industrial applications.

According to a first general aspect, there is provided a method of allocating radio resources in a radio access network (RAN) for operating a plurality of devices. The method comprises or triggers a step of determining, by a first radio coordinator (FRC), a need for radio resources for each of a plurality of second radio coordinators (SRCs) for assigning the radio resources to an associated device group. The plurality of devices is grouped into a plurality of device groups, each device group being associated to one of the SRCs. The method further comprises or triggers a step of allocating the radio resources to each of the plurality of second radio coordinators by the first radio coordinator based on the determined need for radio resources and a step of sending, to at least one of the plurality of second radio coordinators, an allocation message indicative of the allocated radio resources.

Embodiments of the method according to the first general aspect may include one or more of the following aspects and/or features.

By determining the need for radio resources for each SRC, the FRC may determine the radio resources required by each of the SRCs. By allocating the radio resources and sending the allocation message, each of the SRCs may be enabled to control and coordinate the radio communication of the devices in its device group.

The term "being associated to one of the SRCs" may encompass that the SRC is responsible for assigning radio resources to the devices of its associated device group. Assigning radio resources may include coordinating radio resources between the different devices and controlling medium access of the devices of its associated device group.

The technique may be embodied in a two-tier architecture and/or a two-tier coordination hierarchy. In the first tier, a single FRC may govern coarse-grained coordination of radio resources on a broader operational area in order to allocate radio resources to the plurality of SRCs. E.g., the FRC does not directly govern the medium access for field devices, i.e., a FRC does not directly handle mission-critical or operation-critical communication. In the second tier, each of the SRCs may assign radio resources and/or manage mission-critical or operation-critical communication for the devices of its associated device group. Each of the SRCs may rely on the FRC for radio resource allocation.

The SRCs may carry out a fine-grained coordination of radio resources for the devices in its associated device group and/or in its radio cell, e.g., for assigning the radio resources. The fine-grained coordination or assignment of radio resources may be subject to the constraint that each of the SRCs can only assign radio resources that have been allocated to it by the FRC. The FRC may cover an operational area larger than an operational area of each SRC. Alternatively or in addition, the FRC may handle functionalities (e.g., the allocation) on time scales that are longer (i.e., more than 1 ms and/or more than one Transmission Time Interval) compared to time scales of functionalities (e.g., the assignment) of the SRCs.

The technique may be embodied to logically separate mission-critical or operation-critical communication (e.g., the assignment) from coordination functionalities (e.g., the allocation), to provide scalability with efficient resource utilization to the RAN operating a large number of devices, as e.g. deployed in a factory hall, and to satisfy very low latency and very high reliability communication demands, particularly for mission-critical or operation-critical communication in industrial applications. Furthermore, the multi-cell architecture and coordination mechanism may save power consumption by avoiding the need to transmit over longer distances using high transmit power levels and hence resulting in reduced energy consumption.

The RAN and/or the preamble may be compatible with the standard family IEEE 802.11 (e.g., IEEE 802.11ax), the 3rd Generation Partnership Project (3GPP) Long Term Evolution (LTE), LTE-Advanced (e.g., 3GPP LTE Release 10, LTE Advanced Pro (e.g. 3GPP LTE Release 13) or 3GPP New Radio (NR) for the 5th Generation (5G). The technique may be implemented for transmitting data on a narrowband channel in a wideband RAN, e.g. for machine type communication (MTC) and/or narrowband Internet of Things (IoT) devices. Some of the IIoT (or Critical Machine Type Communication (C-MTC)) applications may not use narrowband spectrum as in Massive Machine Type Communication (M-MTC) or classical IoT applications due to stringent QoS demands.

The method may be performed by a digital unit of an eNodeB in LTE or gNodeB in New Radio (NR) based network, may use asynchronous data transmissions to communicate with the plurality of SRCs or may communicate with the plurality of SRCs at periodic or scheduled instants of time.

The FRC and/or the SRCs may be referred to as nodes of a radio network, e.g., the RAN. As used herein, the terms "first radio coordinator" and "second radio coordinator" are used to distinguish between two different logical units of the proposed two-tier architecture.

The "first radio coordinator" may be embodied by a device and/or apparatus, which is provided, in particular, in order to allocate radio resources in the RAN to a plurality of second radio coordinators (e.g., representing nodes of the RAN). For example, the FRC may reside in the digital unit of a base station (e.g., the eNodeB in LTE or the gNodeB in NR).

The "second radio coordinator" may be embodied by a device and/or apparatus, which is provided, in particular, in order to assign radio resources in the RAN to a plurality of devices, e.g., to a plurality of field devices of an industrial automation application.

Physically, one, some or each of the SRCs may be embodied by (e.g., run on) the same physical device as the FRC, e.g. a digital unit of a radio base station (e.g., an eNodeB or NR base station). Thus, the FRC and one, some or each of the SRCs may be embodied in a single apparatus, e.g. as or as part of an RBS. Alternatively or in addition, one some or each of the SRCs may be embodied by (e.g., run on) spatially separated devices, e.g., by distinct RBSs. Thus, the FRC and one, some or each of the SRCs may be embodied as a first apparatus and at least one second apparatus, respectively.

Different SRCs (and optionally the one or more SRCs and the FRC) may use different radio technologies or the same radio technology. The different SRCs may apply their radio technology with the constraint that the radio technology uses only the allocated radio resources. Alternatively or in addition, the different SRCs may apply their radio technology with the constraint that the radio technology used within a device group, e.g. an automation cell, coordinated by an SRC, is capable of satisfying the low-latency and high-reliability communication requirements.

Herein, the terms "allocating" and "assigning" radio resources may have the same meaning, e.g., including coordination, controlling and/or scheduling usage of the radio resources. To clearly distinguish between the different functionalities or tasks of the FRC and the SRCs, respectively, two different terms are preferably used. The term "allocating" or "allocation" is preferably used for the allocation of radio resources to each of the plurality of second radio coordinators by the first radio coordinator. The term "assigning" or "assignment" is preferably used for the allocation (assignment) of radio resources by said second radio coordinator to the devices of its associated device group.

Above exemplary definitions regarding the terms "first radio coordinator", "second radio coordinator", "allocating" and "assigning" may be applied to the whole document and, e.g., the aspects set forth below.

The allocation message sent by the FRC may be indicative of the radio resources allocated to all SRCs. The allocation message may be broadcasted or multicasted to the at least one of the plurality of second radio coordinators. Alternatively, dedicated allocation messages may be sent to the at least one of the plurality of SRCs individually or, in case a dedicated allocation message is sent to only one SRC, the dedicated allocation message may be unicasted to this SRC.

The allocation message may be sent to all of the plurality of SRCs. Alternatively, the allocation message may be sent only to a subset of the plurality of SRCs. By way of example, no allocation message may be sent to the SRCs which do not have any alteration on the already (e.g., previously) allocated radio resources. Accordingly, as to a further aspect, the allocation message may be sent only to those SRCs by the FRC whose allocated radio resources have changed (e.g., as a result of the step of determining or the step of allocation at the FRC) compared to their previous allocation of radio resources. By way of example, the allocation message may be sent (e.g., multicasted) to the SRCs which need to be informed of an altered allocation of radio resources (e.g., an altered radio resource assignment settings) or which are affected by the altered allocation of radio resources (e.g., the altered radio resource assignment settings). Those SRCs whose previous allocation of radio resources suffice or their allocation of radio resources (e.g., their radio resource assignment settings) are unaltered may keep on using the already allocated radio resources as before, e.g., in a semi-persistent manner.

The step of allocating the radio resources to each of the plurality of SRCs by the FRC may depend on how much radio resources are available at the FRC to be allocated to the SRCs. The radio resources may be allocated for (i.e., the "allocation" may refer to) an uplink (e.g., a data transfer from a device to the associated SRC), a downlink (e.g., a data transfer from an SRC to at least one of its associated devices) and/or a sidelink (e.g., a data transfer between at least two devices associated to the same SRC) radio communication.

The FRC may act as radio resource coordinator with a global view on an entire area, e.g. a factory hall, where the plurality of devices is located. The FRC may be responsible for or perform generic functionalities such as authentication, admission control, global resource management, interference coordination among different cells (e.g., in licensed radio spectrum) and/or coexistence management (e.g., in unlicensed radio spectrum).

According to a further aspect, the allocated radio resources are specified in terms of at least one of time, frequency and spatial resources. By way of example, the allocated radio resources may comprise time and frequency resources, preferably also spatial resources. In other words, the allocated radio resources may be specified in terms of time, frequency, space or any combination thereof. For example, the allocated radio resources may be specified in terms of time slots allowed to use in each frequency channel by a certain SRC and/or by the devices associated with the given SRC. Allocation of spatial resources may comprise selecting the transmit power level. Allocation of spatial resources may also include directional aspects and/or spatial multiplexing that are to be applied to the resource allocation scheme.

A particular, but non-exhaustive, application of the technique lies in industrial automation applications, e.g., comprising one or more control loops involving wireless communication of the plurality of devices. For clarity, the technique is mainly described with reference to applications in industrial automation, but without limiting its scope in any way thereto.

According to yet another aspect, the plurality of devices may include at least one of an actuator configured for wireless communication, a sensor configured for wireless communication and a programmable logic controller configured for wireless communication of an industrial automation application. The industrial automation application may be any industrial application scheme, including a manufacturing and factory automation, machine control and/or industrial control scheme. The devices may be referred to as Internet of Things (IOT) devices, particularly Industrial IOT (IIOT) devices and/or wireless field devices.

Each of the SRCs may operate in a section of a local area wherein the plurality of devices is located. The section may be called a local cell. The section or local cell may comprise all the devices of the associated device group of a particular SRC. The SRC may be also referred to as a local resource coordinator (LRC) vis-à-vis the FRC that may be referred to as a global resource coordinator (GRC), e.g., as the FRC governs the allocation of resources on a broader operational area, e.g. across the entire factory hall, in order to allocate the radio resources to the SRCs.

According to a further aspect, the step of determining the need for radio resources may comprise receiving, by the FRC, a radio resource request, wherein the radio resource request is indicative of radio resources required by at least one of the plurality of SRCs for assigning the radio resources to its associated device group. The need for radio resources may be determined based on the received radio resource request. Based on the radio resource requests (hereinafter also referred to as resource request), the FRC may be informed on changing resource needs, e.g., at the level of the corresponding SRC and/or one or more of its associated devices.

Each resource request may indicate the radio resources required by one of the SRCs. The FRC may receive multiple such resource requests to determine the radio resources required by the SRCs. The FRC may receive such a resource request from a single SRC, from a subset of the SRCs or from all of the SRCs. The one or more radio resource requests may be received by the FRC directly from at least one of the SRCs. The resource request may be triggered (automatically) by the SRCs. The radio request may not necessarily originate from at least one of the plurality of SRCs but could also be sent manually, e.g., from a system designer, operator or field engineer, to the FRC. A resource request may be received by the FRC at asynchronous time intervals or at synchronized time intervals at which such resource requests are handled.

The radio resource request may comprise a Quality of Service (QoS) requirement, e.g., information indicating a latency and/or reliability requirement of the devices in the associated group of devices of a particular SRC. The person skilled in the art is familiar with suitable parameters or metrics to specify QoS requirements in general, and latency and reliability requirements of the radio communication in particular.

Alternatively or in addition, the radio resource request may comprise information that indicates the number of devices in the associated group of an SRC and/or information that comprises location information, e.g., to specify the location or position of a particular SRC and/or its device group.

Alternatively or in addition, the radio resource request may be (e.g., comprise a measure) indicative of the traffic load at the corresponding SRC. For periodic traffic, information included in the radio resource request that is indicative of the traffic load may be, for instance, data size and the periodicity interval, such as 300 bytes of data generated at every 10 ms according to a non-limiting example.

The step of determining the need for radio resources may comprise determining a quantitative measure based on the information contained in the radio resource request. The quantitative measure of the need for radio resources may be based on at least one of the information on the traffic loads, QoS requirements (e.g., reliability and/or latency) and number of devices.

Optionally, some or all of the radio resource requests, or an additional radio request, may be received directly from at least one of the plurality of devices. The directly received radio resource request may be indicative of a need for radio resources by the one or more respective devices.

According to a further aspect, the step of determining the need for radio resources may comprise receiving, by the FRC, a feedback information from at least one of the plurality of SRCs. The feedback information may relate to radio resources previously allocated to the corresponding SRC. The feedback information may be indicative of at least one of a state (e.g., channel state information) of the previously allocated radio resources, a resource utilization, a spectral interference situation and a reliability index of the devices of the associated group of the at least one of the plurality of second radio coordinators.

The need for radio resources may be determined based on the received feedback information. For example, based on the feedback information, the FRC may evaluate to which extent or how well the current resource allocation is working or sufficient. The FRC may change the allocation of radio resources, e.g., if necessary to optimize the resource utilization level and/or to fulfill the QoS requirement.

The feedback information on the resource utilization may be indicative of a ratio to which extent and/or how well the allocated radio resources have been utilized by the devices of the associated group and/or to which extent the QoS requirements of the devices of the associated group have been met. The feedback information on the interference situation may be indicative of how much overall spectral interference was encountered by the devices of a particular group.

The feedback information on the interference situation may, in addition or alternatively, be received from an external sensor, i.e. other than the SRCs. External dedicated spectral sensors may be used to measure the spectral interference levels and/or the devices themselves may measure the interference encountered. Thus, the FRC may gather QoS requirements of the devices in each device group or local cell via the SRCs by receiving the feedback information.

The reliability index may be indicative of, or include, a packet error rate and/or a retransmission count. A Hybrid Automatic Repeat reQuest (HARQ), for instance a rate of Automatic Repeat requests (ARQs) per HARQ process, may be used as a metric for the retransmission count (e.g., in LTE or NR).

Further, the step of determining the need for radio resources may comprise sending, by the FRCs, a message to at least one of the plurality of SRCs. The message may trigger the SRCs or the corresponding one of the SRCs to transmit at least one of the radio resource request and the feedback information.

According to a further aspect, the step of allocating the radio resources to the plurality of second radio coordinators may comprise a machine learning procedure. The machine learning procedure may be used for determining the allocation of radio resources. By way of example, the machine learning procedure may be configured to determine the allocation of the radio resources for the plurality of SRCs that meets a QoS requirement for each of the plurality of SRCs and/or does not exceed a total amount of radio resources available at the FRC to be allocated to the SRCs.

The machine learning procedure may be embodied to automatically incorporated in the radio resource allocation at least one of deployment conditions, dynamic traffic characteristics and time-varying environmental behaviors (such as spectral interference). The machine learning procedure may significantly reduce or avoid high efforts for a system-level model. Analytical work can be reduced and/or more rapidly adjusting allocations may be achievable.

Alternatively or in addition to the machine learning procedure, other procedure such as a heuristic technique, a control logic, a decision tree-based method, etc. may also be used to determine the allocation of the radio resources.

According to a further aspect, the machine learning procedure used for determining the allocation of radio resources may be based on a genetic algorithm (GA). The GA may include a step of generating a plurality of members of a population. Each member may define, or may correspond to, an allocation of the radio resources to each of the plurality of SRCs. The GA may include a step of evaluating the members based on a fitness function. The fitness function may be configured to assess a member of the population, i.e., to assess the allocation of the radio resources for the plurality of SRCs jointly, i.e. not individually for each SRC. The goal of the GA may be to find an optimum value, e.g. the minimum value, of the fitness function being indicative of an optimal radio resource assignment, e.g. an optimal radio resource assignment that satisfies the QoS of all devices in the factory hall with efficient resource utilization and keep the interference levels low.

For example, a fitness function may be used that includes a metric that favors the least number of frequency switchings at the SRC level for a given allocation of the radio resources. According to this aspect, the fitness function may include a metric that determines and/or is indicative of the number of frequency switchings required for each of the SRCs resulting from the given or allocated time and frequency resource allocation. As a result, the genetic algorithm may give preference for contiguous timeslots at the SRCs and/or reducing switching on and switching off the radio communication of the SRCs (which may cause a communication overhead and which can thereby be reduced).

Additionally or alternatively, a fitness function may be used that favors radio resource allocations that result in higher resource utilization, fewer spectral interference and/or a higher reliability index for the communication at the SRCs. As a result, the genetic algorithm may give preference to radio resource allocations that, e.g., on an aggregated level for all SRCs, result in higher resource utilization, fewer spectral interference and a higher reliability index for the communication at the SRCs. According to this aspect, the fitness function may include a metric that assesses a radio resource allocation for the SRCs based on feedback information as described above. As described above, the feedback information received at the FRC may be indicative of at least one of a resource utilization, a spectral interference situation and a reliability index of the devices of the associated group at a given SRC for a given resource allocation of this SRC.

Feedback information may be gathered over time by the FRC, e.g., for different resource allocations. The feedback information for the different resource allocations may be used (e.g., by means of, or in, the fitness functions) to give preference to resource allocations that result in at least one of an optimal or at least favorable resource utilization, spectral interference situation and reliability index. By collecting more and more such feedback information over time, the GA is able to learn over time so that the fittest, i.e. optimal, resource allocation may be selected.

The machine learning procedure, e.g., a GA, may be implemented to learn over time (e.g., in multiple iterations) which resource assignment in view of the total amount of available radio resources best satisfies the QoS requirements. Alternatively or in addition, the machine learning procedure, e.g., a GA, may adapt automatically to any runtime changes (e.g., if necessary).

The steps of the GA of generating a plurality of members of a population and evaluating the members based on the fitness function may further comprise any one of the following steps of:

(a) generating a plurality of members of an initial population, each member determining an allocation of radio resources to each of the plurality of second radio coordinators, wherein each radio resource allocation is defined by an allocation of at least time and frequency radio resources for the plurality of SRCs that does not exceed an available total amount of radio resources and/or that fulfills a QoS requirement as required by the SRCs for assigning the radio resources to their associated device group;

(b) determining a fitness value for each member, i.e. for each resource allocation, in the initial population using the fitness function;

(c) generating a reproduction population by selecting members, i.e. resource allocations, from the initial population with probability depending on (e.g., proportional to) their fitness values;

(d) generating a successor population from said reproduction population, said successor population comprising a plurality of members, i.e. resource allocations created as recombinations and/or as mutations from members, i.e. resource allocations, selected from the reproduction population based on their fitness values;

(e) generating a fitness value for each member, i.e. resource allocation, in the successor population using said fitness function; and

(f) repeating the steps of generating a reproduction population, generating a successor population, and generating a fitness value for each member in the successor population until the successor population meets a threshold, e.g. until the successor population comprises a member having a fitness value exceeding a threshold value.

The population member of the successor population having the best fitness value as determined by the fitness function (or the population member meeting a baseline fitness criterion) may be selected as the optimal solution, i.e. as the resource assignment in the given GA iteration.

According to a yet another aspect, the step of determining the need for radio resources comprises determining, for each of the SRCs, a number and/or a measure of redundant radio resources needed for each of the plurality of second radio coordinators to ensure a transmission reliability requirement. The redundancy of resources may be decided and/or selected such that it conforms to the latency bound in the indicated QoS requirement. The transmission reliability requirement may be derived from the QoS requirement, e.g., information that is included in the radio resource request received by the FRC.

The method may further comprise or trigger the step of determining, based on the determined need for radio resources, if the radio resources available to the FRC for allocation to the plurality of second radio coordinators are sufficient to fulfill a criteria indicative of a quality of service requirement of the plurality of devices, and if not, requesting, by the FRC, more radio resources from a spectrum managing system.

A spectrum managing system may refer to an operator owning the spectrum that could provide more bandwidth for the industrial automation application as requested by the FRC. Alternatively, the FRC may have a direct access to a database of a spectrum management system like the Licensed Shared Access (LSA), where it could lease or hoard more spectrum bandwidth at a given time and location. According to another option, the FRC could indicate to the system operator (e.g. a network engineer) the need for more spectrum resources by the SRCs. Based on this, the operator (engineer) could manually make available more resources for the FRC.

According to a further aspect, the step of allocating the radio resources to the plurality of SRCs may comprise determining a number of time slots allowed to use in each frequency channel by a certain second resource coordinator based on a latency constraint indicated in the resource request received from said SRC.

According to a second general aspect, there is provided a method of assigning radio resources in a radio access network (RAN) for operating a plurality of devices, the method comprising or triggering a step of receiving, at a second radio coordinator (SRC), an allocation message from a first radio coordinator (FRC), the allocation message being indicative of radio resources allocated to the SRC. The method of assigning radio resources in the RAN for operating a plurality of devices further comprises or triggers a step of assigning, by said SRC, radio resources to the devices of its associated device group based on the radio resources allocated to said SRC according to the received allocation message. The plurality of devices are grouped into a plurality of device groups, each device group being associated to one of the SRCs.

Embodiments of the method according to the second general aspect may include one or more of the following aspects and/or features.

The method may be performed by a digital unit of an a base station or eNodeB in LTE or NR-based network. As mentioned above, physically, a certain SRC may run on the same physical device as a FRC, e.g. a digital unit of the eNodeB or NR base station. Alternatively, a SRC can also run on completely different devices such as an RBS.

According to another aspect, said step of allocating radio resources may comprise assigning at least one of timeslots and frequency channels and/or spatial radio resources to the devices of the associated device group. The SRC may be configured to control medium access of the devices of its associated device group. Allocating spatial resources to the plurality of devices may include controlling transmit power levels and/or may also include controlling directional transmission parameters, such as directivity gains, antenna beams and their widths, etc., e.g., in the case of spatial multiplexing in addition to the transmission power levels.

As mentioned above, the plurality of devices may include at least one of an actuator, a sensor and a programmable logic controller, each being configured for wireless communication, of an industrial automation application. Each of the device groups may correspond to a local cell of devices that cover one or more industrial automation processes. The SRC may be configured to support a sidelink or Device-to-Device (D2D) communication for inter-device communication, i.e., the assignment of the SRC may allow network-assisted D2D.

The SRCs may operate in a smaller area called local cell compared to the area covered by the FRC. A single FRC may govern coarse-grained coordination of radio resources on a broader operational area, whereas the plurality of SRCs may carry out fine-grained coordination of radio resources for field devices in its local radio cell.

The method of assigning radio resources in a RAN for operating a plurality of devices may further comprise or trigger a step of sending, from the SRC to the FRC, a radio resource request. The radio resource request may be indicative of radio resources required by the SRC for assiging radio resources to the devices of its associated device group. By sending the radio resource request, the SRC may inform the FRC about its radio resource needs.

The method of assigning radio resources in a RAN for operating a plurality of devices may further comprise or trigger a step of determining, by the SRC, whether the radio resources allocated to the SRC are sufficient to meet a quality of service requirement of the devices of its associated device group. If not, the method may comprise or trigger a step of sending the radio resource request. By sending the radio resource request the SRC may inform the FRC about its radio resource needs. The radio resource request may be sent responsive to a change in the need for radio resources at the SRC. The radio resource request may be sent responsive to a corresponding request received from the FRC.

The method of assigning radio resources in a RAN for operating a plurality of devices may further comprise or trigger a step of sending, from the SRC to the FRC, a feedback information. The feedback information may be indicative of at least one of a resource utilization and a spectral interference situation of the devices of the associated device group of the SRCs.

The method of assigning radio resources in a RAN for operating a plurality of devices may further comprise or trigger the steps of retrieving, by the SRC, an information from the devices of its associated device group. The information may be indicative of at least one of a QoS requirement, a resource utilization and a spectral interference situation of the devices of its associated device group. The method may further comprise or trigger a step of determining at least one of the radio resource request and the feedback information based on the retrieved information. According to this aspect, the SRC may be configured to actively retrieve feedback information for the devices of its associated device group.

According to a further aspect, the SRC (e.g., each of the SRCs) may assign the radio resources to the devices of its associated device group on a time-scale faster than the time-scale at which the SRC receives allocation messages from the FRC. By way of example, the SRC(s) may be assigning the radio resources to the devices of its associated device group on a time-scale that is 1 TTI, 1 ms or less. By assigning the radio resources to the devices, the SRC may govern medium access to guarantee successful packet delivery within 1 TTI, 1 ms, or less.

Physically, a certain SRC may be implemented (e.g., run) on the same physical device as an FRC, e.g. a digital unit of the eNodeB or NR base station. Alternatively, a SRC can also run on completely different devices such as an RBS. SRCs and/or FRCs may use different radio technologies or the same radio technology, e.g., with the constraint that the radio technology used within an automation cell and/or device group that is coordinated by an SRC is capable of satisfying the low-latency and high-reliability communication requirements. Different SRCs may use the same or different radio technologies.

According to a third general aspect, there is provided a method of allocating and assigning radio resources in a RAN for operating a plurality of devices comprising a method of allocating radio resources in a RAN for operating a plurality of devices according to the first general aspect and a method of assigning radio resources in a RAN for operating a plurality of devices according to the second general aspect.

The second general method aspect and/or the third general method aspect may further comprise any of the features or steps of the first general method aspect or any features or steps corresponding thereto.

According to another aspect, a computer program product is provided. The computer program product comprises program code portions for performing any one of the steps of the method aspects disclosed herein when the computer program product is executed by one or more computing devices. The computer program product may be stored on a computer-readable recording medium. The computer program product may also be provided for download via a data

8

network, e.g. via the radio network and/or via the Internet. Alternatively or in addition, the method may be encoded in a Field-Programmable Gate Array (FPGA) and/or an Application-Specific Integrated Circuit (ASIC), or the functionality may be provided for download by means of a hardware description language.

According to an apparatus aspect, a first radio coordinator (FRC) for allocating radio resources in a radio access network (RAN) for operating a plurality of devices is provided. The FRC is configured to perform the method for allocating radio resources in the RAN for operating a plurality of devices as described in this document. Alternatively or in addition, the FRC may comprise a determining unit configured to determine a need for radio resources for each of a plurality of SRCs for assigning the radio resources to an associated device group, wherein the plurality of devices are grouped into a plurality of device groups, each device group being associated to one of the SRCs. The FRC may further comprise an allocating unit configured to allocate the radio resources to each of the plurality of SRCs based on the determined need for radio resources. The FRC may further comprise a sending unit configured to send, to at least one of the plurality of SRCs, an allocation message indicative of the allocated radio resources.

According to another apparatus aspect, a second radio coordinator (SRC) for assigning radio resources in a radio access network (RAN) for operating a plurality of devices is provided. The SRC is configured to perform the method for assigning radio resources in the RAN for operating a plurality of devices as described in this document. Alternatively or in addition, the SRC may comprise a receiving unit configured to receive an allocation message from an FRC, the allocation message being indicative of radio resources allocated to the SRC. The SRC may further comprise an assigning unit configured to assign radio resources to the devices of its associated device group based on the radio resources allocated to said SRC according to the received allocation message, wherein the plurality of devices are grouped into a plurality of device groups, each device group being associated to one of the SRCs.

According to a further apparatus aspect, a first radio coordinator (FRC) for allocating radio resources in a radio access network (RAN) for operating a plurality of devices is provided. The FRC comprises at least one processor and a memory, said memory comprising instructions executable by said at least one processor, whereby the FRC is operative to determine a need for radio resources for each of a plurality of second radio coordinators (SRCs) for assigning the radio resources to an associated device group, wherein the plurality of devices are grouped into a plurality of device groups, each device group being associated to one of the SRCs. The FRC is further operative to allocate the radio resources to each of the plurality of SRCs based on the determined need for radio resources. The FRC is further operative to send, to at least one of the plurality of SRCs, an allocation message indicative of the allocated radio resources.

According to a further apparatus aspect, a second radio coordinator (SRC) for assigning radio resources in a radio access network (RAN) for operating a plurality of devices is provided. The SRC comprises at least one processor and a memory, said memory comprising instructions executable by said at least one processor, whereby the SRC is operative to receive an allocation message from a first radio coordinator (FRC), the allocation message being indicative of radio resources allocated to the SRC. The SRC is further operative to assign radio resources to the devices of its associated device group based on the radio resources allocated to said SRC according to the received allocation message, wherein the plurality of devices are grouped into a plurality of device groups, each device group being associated to one of the SRC.

According to a still further apparatus aspect, a first radio coordinator (FRC) for allocating radio resources in a radio access network (RAN) for operating a plurality of devices is provided. The FRC may comprise one or more modules for performing the first general method aspect. Alternatively or in addition, the FRC may comprise a determination module for determining a need for radio resources for each of a plurality of second radio coordinators (SRCs) for allocating the radio resources to an associated device group, wherein the plurality of devices are grouped into a plurality of device groups, each device group being associated to one of the second radio coordinators. The FRC may further comprise an allocation module for allocating the radio resources to each of the plurality of SRCs based on the determined need for radio resources. The FRC may further comprise a sending module for sending, to at least one of the plurality of SRCs, an allocation message indicative of the allocated radio resources.

According to a still further apparatus aspect, a second radio resource coordinator (SRC) for assigning radio resources in a radio access network (RAN) for operating a plurality of devices is provided. The SRC may comprise one or more modules for performing the second general method aspect. Alternatively or in addition, the SRC may comprise a receiving module for receiving an allocation message from a first radio coordinator (FRC), the allocation message being indicative of radio resources allocated to the SRC. The SRC may further comprise an assignment module for assigning radio resources to the devices of its associated device group based on the radio resources allocated to said SRC according to the allocation message, wherein the plurality of devices are grouped into a plurality of device groups, each device group being associated to one of the SRCs.

Any of the apparatuses, i.e. any of the FRC and the SRCs, may further include any feature disclosed in the context of the method aspects. Particularly, any one of the units or modules, or a further unit or module, may be configured to perform or initiate one or more of the steps of any one of the method aspects.

According to yet another aspect, a system is provided, comprising the FRC and the plurality of SRCs.

**Brief Description of the Drawings**

Further details of embodiments of the technique are described with reference to the enclosed drawings, wherein:

Fig. 1   shows a schematic block diagram of a first radio resource coordinator for allocating radio resources in a radio access network;

Fig. 2   shows a schematic block diagram of a second radio resource coordinator for assigning radio resources in a radio access network;

Fig. 3   shows a flowchart for a method of allocating radio resources in a radio access network, which is implementable by the radio resource coordinator of Fig. 1;

Fig. 4   shows a flowchart for a method of assigning radio resources in a radio access network, which is implementable by the radio resource coordinator of Fig. 2;

Fig. 5   schematically illustrates the two-tier communication and coordination architecture according to an embodiment;

Fig. 6   schematically illustrates a control loop automation scenario involving wireless communication of field devices;

Fig. 7   shows a flowchart for an implementation of the method of Fig. 4;

Fig. 8   shows a flowchart for an implementation of the method of Fig. 3;

Fig. 9   schematically illustrates the allocation of time and frequency radio resources for two SRCs according to a simple non-limiting example;

Fig. 10   schematically illustrates non-homogeneous resource requirements of two local radio cells;

Fig. 11   schematically illustrates the message format sent from a second radio coordinator to a first radio coordinator according to an embodiment;

Fig. 12   schematically illustrates exemplary message formats of the allocation message according to an embodiment;

Fig. 13   shows a flowchart for a Genetic Algorithm used for determining the resource allocation according to an embodiment;

Fig. 14   shows a schematic block diagram of an embodiment of a first radio resource coordinator; and

Fig. 15   shows a schematic block diagram of an embodiment of a second radio resource coordinator.

**Detailed Description**

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details.

While terminologies from 3GPP LTE and NR have been used to exemplify a possible implementation, this should not be seen as limiting the scope of the invention to only the aforementioned system. Other wireless systems may also benefit from exploiting the ideas covered within this disclosure. Moreover, while the following embodiments are primarily described for a 5G New Radio implementation, it is readily apparent that the technique described herein may also be implemented in any other radio network, including Long Term Evolution (LTE) or a successor thereof, Wireless Local Area Network (WLAN) according to the standard family IEEE 802.11 and/or ZigBee based on IEEE 802.15.4.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general-purpose computer, e.g. including an Advanced RISC Machine (ARM). It will also be appreciated that, while the following embodiments are primarily described in context with methods and devices, the invention may also be embodied in a computer program product as well as in a system comprising a computer processor and memory coupled to the processor, wherein the memory is encoded with one or more programs that may perform the functions and steps or implement the units and modules disclosed herein.

The following embodiments are not mutually exclusive. Components from one embodiment may be tacitly assumed to be present in another embodiment and it will be obvious to a person skilled in the art how those components may be used in the other exemplary embodiments.

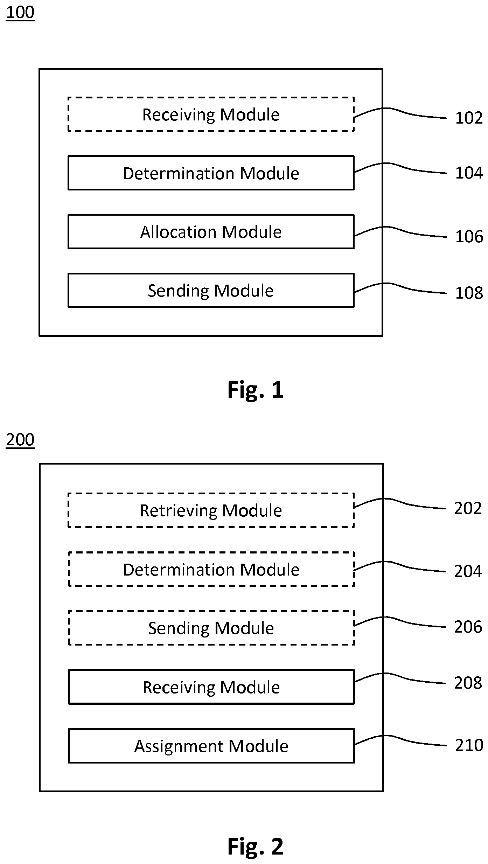

Fig. 1 shows a schematic block diagram of a first radio resource coordinator (FRC) 100 for allocating radio resources in a radio access network for operating a plurality of devices. The FRC comprises a determination module 104 for determining a need for radio resources for each of a plurality of second radio coordinators (SRCs) 200 for allocating the radio resources to an associated device group. The plurality of devices is grouped into a plurality of device groups, each device group being associated to one of the second radio coordinators. The FRC comprises an allocation module 106 for allocating the radio resources to each of the plurality of SRCs based on the determined need for radio resources and a sending module 108 for sending, to each of the plurality of SRCs, an allocation message indicative of the allocated radio resources.

The FRC may comprise a receiving module 102 for receiving a radio resource requests, wherein such a radio resource request is indicative of radio resources required by at least one of the plurality of SRCs for assigning the radio resources to its associated device group and/or for receiving feedback information from at least one of the plurality of SRCs, the feedback information being indicative of at least one of a resource utilization, a spectral interference situation and a reliability index of the devices of the associated group of the at least one of the plurality of SRCs. The need for radio resources may then be determined based on the received resource request(s) and feedback information. The FRC may be embodied in the digital unit of the eNodeB in LTE or New Radio (NR).

The allocated radio resources may be specified in terms of time, frequency, space and any combination thereof. For example, the allocated radio resources may be specified in terms of time slots allowed to use in each frequency channel by a certain SRC. Allocation of spatial resources may comprise selecting the transmit power level. For directional transmission and beamforming systems, without any limitation, the allocation of spatial resources according to the method may comprise the selection of beams, beamwidths and supporting spatial multiplexing.

Fig. 2 shows a schematic block diagram of a second radio resource coordinator (SRC) 200 for assigning radio resources in a radio access network for operating a plurality of devices. The SRC 200 comprises a receiving module 208 for receiving an allocation message from a first radio coordinator, the allocation message being indicative of radio resources allocated to the second radio coordinator; and an assignment module 210 for assigning radio resources to the devices of its associated device group based on the radio resources allocated to said second radio coordinator according to the allocation message. As noted above, the plurality of devices is grouped into a plurality of device groups, each device group being associated to one of the second radio coordinators.

The SRC may be embodied by the same physical device as the FRC, e.g. a digital unit of the eNodeB or NR base station. Alternatively, a SRC may be embodied by a different node of the RAN, such as a radio base station (RBS). The SRCs and FRCs may use different or same radio technologies.

Optionally, the SRC may comprise a retrieving module 202 configured to retrieve information from the devices of its associated device group, wherein the information is indicative of at least one of a quality of service requirement, a resource utilization and a spectral interference situation of the devices of its associated device group. The SRC 200 may further comprise a determination module 204, configure to determine at least one of the radio resource request and the feedback information based on the retrieved information. The SRC 200 may further comprise a sending module 206 for sending, to the FRC, the feedback information and/or the radio resource request, the resource request being indicative of radio resources required by the SRC for assigning radio resources to the devices of its associated device group.

Any of the modules of the device 100 and the device 200 may be implemented by units configured to provide the corresponding functionality.

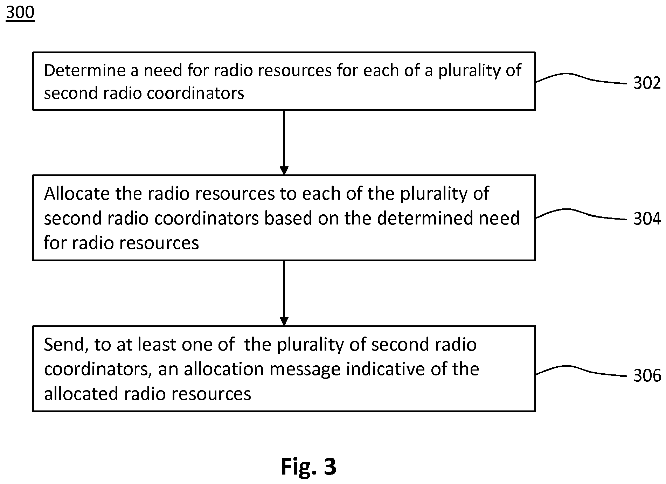

Fig. 3 shows a flowchart for a method of allocating radio resources in a RAN for operating a plurality of devices. The method 300 comprise or triggers the step of determining 302, by the FRC 100, a need for radio resources for each of a plurality of SRCs 200. The SRCs require these radio resources in order to assign them to the devices of an associated device group.

Determining the need for radio resources may involve one or both of the following: receiving an resource request by one or more of the SRCs and receiving a feedback on resource utilization and spectral interference from one or more of the SRCs.

The method 300 further comprise or triggers the step of allocating 304 the radio resources to each of the plurality of SRC by the FRC based on the determined need for radio resources. The allocation of radio resource may not only affect SRCs from which a radio resource request or a feedback information has been received but may also affect other SRCs whose resource allocation is simply affected by the new resource allocation.

The method 300 further comprise or triggers the step of sending 306, to at least one of the plurality of second radio coordinators 200, an allocation message 120 that is indicative of the allocated radio resources.

The method 300 may be performed by the device 100, e.g. at an apparatus that embodies the FRC. For example, the modules 102, 104 and 106 may perform the steps 302, 304 and 306, respectively.

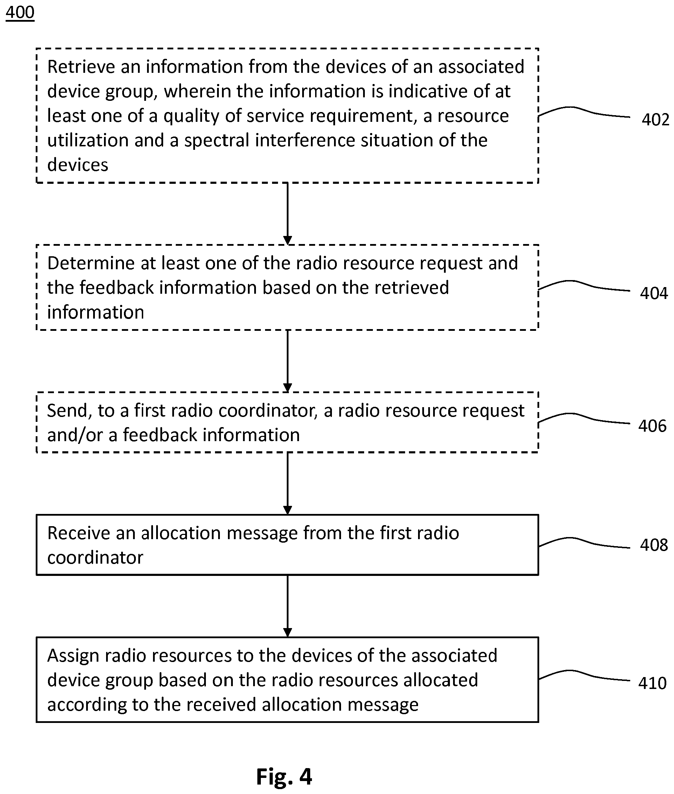

Fig. 4 shows a flowchart for a method of assigning radio resources in a RAN, for operating a plurality of devices. The method 400 comprises or triggers the step of receiving 408, at a SRC 200, an allocation message from a FRC 100, the allocation message being indicative of radio resources allocated to the SRC 200. Further, the method 400 comprises or triggers the step of assigning 410, by said SRC 200, radio resources to the devices of its associated device group based on the radio resources allocated to said SRC 200 according to the received allocation message.

Optionally, the method may further comprise or trigger the step of retrieving 402, by the SRC, an information from the devices of its associated device group, wherein the information is indicative of at least one of a quality of service requirement, a resource utilization and a spectral interference situation of the devices of its associated device group. Optionally, the method may further comprise or trigger the step of determining 404 at least one of the radio resource request and the feedback information based on the retrieved information. The method may further comprise or trigger the step sending 406, from the SRC 200 to the FRC 100, the feedback information and the radio resource request, the resource request being indicative of radio resources required by the SRC 200 for assigning radio resources to the devices of its associated device group.

The method 400 may be performed by the device 200, e.g. at an apparatus that embodies the SRC. For example, the modules 202, 204, 206, 208 and 210 may perform the steps 402, 404, 406, 408 and 410, respectively.

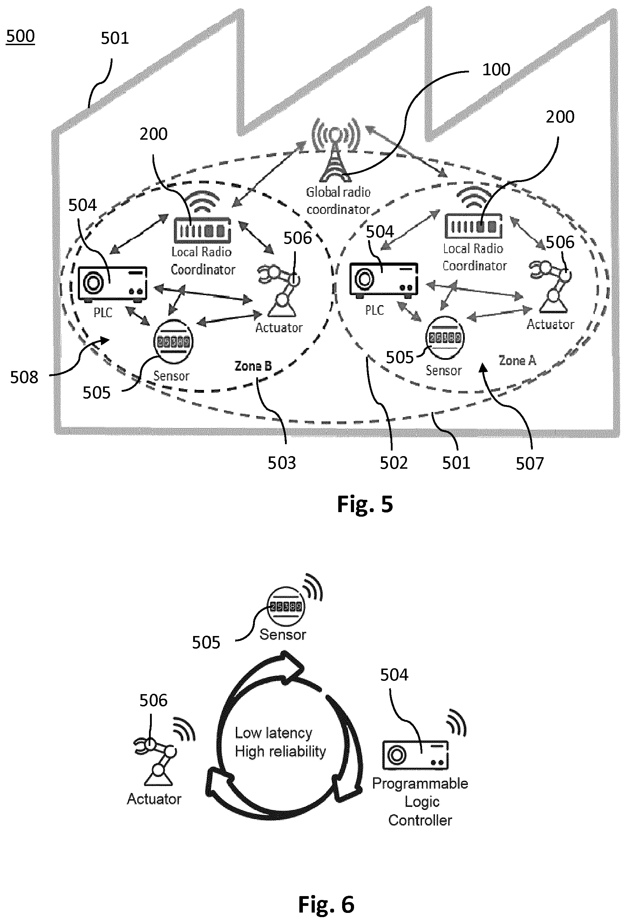

Fig. 5 schematically illustrates the two-tier communication and coordination architecture according to an embodiment for industrial automation applications. The two-tier architecture results from the first and second radio coordinators as described in Figs. 1 and 2 and/or resulting from the methods as described in the Figs. 3 and 4.

An industrial automation application is illustrated in a highly-simplified manner in Fig. 6, which schematically illustrates a control loop automation scenario involving wireless communication of field devices of an industrial automation application. Such a control loop involves wireless communication from a sensor 505 to a PLC 504 and from the PLC 504 to an actuator 506. This automation scenario typically has extremely high reliability and ultra-low latency communication requirements. Such control scenarios are regarded as highly stringent with robust and real-time data communication demands. For instance, in discrete manufacturing processes involving packaging machines, printing presses, and palletizing stations, the maximum communication latency requirement can be lower than 1 ms and reliability demand can be as high as affording only one transmitted message to be lost out of a billion transmissions.

An intuitive solution to meet the capacity requirements in an industrial automation scenario with many field devices operating in a factory hall and configured for wireless communication is to deploy multiple small cells managed by local base stations. This design approach requires appropriate coordination mechanisms among the local base stations in order to carry out a deployment covering large factory halls. A disadvantage of this communication architecture is that, without coordination and radio resource management, an arbitrary use of the wireless spectrum in multiple cells leads to inter-cell interference and degradation in QoS. Radio resources such as transmit power levels, and user allocations in time and frequency have to be coordinated across the whole factory in order to guarantee the QoS requirements, i.e., reliability and latency demands, of each device and achieve the desired coverage and connectivity within the factory hall. Especially, spectral interference among devices has to be kept low in order to ensure that the QoS requirements for the automation processes are satisfied.

Therefore, a two-tier coordination hierarchy and communication architecture 500 for radio resource coordination is proposed as illustrated in Fig. 5 and as embodied by the proposed methods and apparatus aspects:

In the first tier, a single first radio coordinator (RFC) 100, also referred to a Global Radio Coordinator (GRC), governs coarse grained coordination of radio resources on a broader operational area. The FRC 100 acts as radio resource coordinator with a global view on the entire factory hall 501 and is responsible for allocating radio resources to the SRCs 200.

The resource allocation from FRC to SRCs preferably includes time, frequency and spatial resources. The allocation of resources at the FRC 100 is carried out from the pool of total available system resources based on the traffic QoS demands from the SRCs. The FRC 100 aims to allocate resources to SRCs 200 hat eventually satisfy the requirements of devices in each local cell coordinated by an SRC 200. The FRC 100 may be responsible for generic functionalities such as authentication, admission control, global resource management, interference coordination among different cells in the licensed spectrum or coexistence management in the unlicensed spectrum. For example, it can reside in the digital unit of the eNodeB in LTE or New Radio (NR). The FRC 100 covers a larger operational area and handles functionalities on longer time scales (i.e., more than 1 ms). Moreover, having a global knowledge of the service requirements of devices and a feedback on resource utilization, i.e. a feedback on how well the allocated resources have been utilized and how well the QoS requirements have been met, the FRC 100 appropriately allocates resources to SRCs 200.

In the second tier, a set of second radio coordinators (SRCs) 200, also referred to as Local Radio Coordinators (LRCs), carries out fine-grained coordination of radio resources for field devices 504, 505, 506 in its radio cell. Each of the SRCs 200 assigns radio resources and manages mission-critical communication for the devices 504, 505, 506 of its associated device group, wherein the SRCs 200 rely on the FRC 100 for radio resource allocation. Thus, each SRC 200 is directly responsible for resource assignment and medium access of devices under its control in its associated device group, i.e. in the local cell. The resource assignment is carried out in a manner to satisfy the QoS requirements of devices, which implicitly impart as little as possible spectral interference. An SRC 200 assigns timeslots, frequency channels and control the transmit power levels of devices for this purpose.

Thus, a scalable two-tier architecture is proposed, where devices are managed by multiple local radio coordinators (SRCs) 200. The SRCs 200 rely on a first/global radio coordinator (FRC) 100. In an industrial automation cell, devices are typically located in close proximity, which naturally favors small cell deployments and support the two-tier hierarchy. This two-tier coordination hierarchy can logically separate mission-critical functionalities from generic functionalities and provide scalability to a large number of devices as deployed in a factory hall. These functionalities are described in the following.

The plurality of devices are field devices 504, 505, 506 configured for wireless communication of an industrial automation process. The devices are grouped into a plurality of device groups 507, 508, each device group being associated to one of the second radio coordinators 200. For example, the SRC 200 in Zone A 502 is responsible for the assignment of radio resources to the devices in its associated device group 507, whereas the SRC 200 in Zone B 503 is responsible for the assignment of radio resources to the devices in its associated device group 508.

As noted above, the SRCs 200 eventually assign resources to devices 504, 505, 506 and govern the medium access so that the service requirements of devices can be satisfied. All SRCs 200 (and/or alternatively individual devices 504, 505, 506) may contribute to a knowledge base (KB) at the FRC 100 that is used for resource assignment and update, as will be explained further below.

In the second tier, the SRCs 200 operate in a smaller area called local cell, e.g. Zone A 502 or Zone B 503. A local cell can cover one or more automation processes and contains several devices, e.g. Programmable Logic Controllers (PLCs) 504, sensors 505, and actuators 506. The SRCs manage radio resources of their associated devices on a more granular time-scale (ca. 1 ms and lower). The SRC 200 is the entity directly responsible for carrying out the time-critical and reliable communication at the field devices 504, 505, 506. The rationale behind an SRC 200 covering an entire time-critical automation application and its field devices is to minimize additional communication hops and, thus, keeping the processing and communication latency low. A single SRC 200 can coordinate multiple time-critical automation applications provided that the overall communication requirements such as range, traffic QoS and capacity are satisfied.

In contrast, the FRC 100 coordinates several SRCs 200 by managing resources among different local cells on a higher level in order to coordinate and minimize the interference between local cells. Physically, a certain SRC 200 can run on the same physical device as a FRC 100, e.g. a digital unit of the eNodeB or NR base station. Alternatively, a SRC 200 can also run on completely different devices such as a radio base station (RBS). The SRCs 200 and FRCs 100 can use different or same radio technologies, with the constraint that the radio technology used within an automation cell 502 or 503 (coordinated by an SRC 200), is capable of satisfying the low-latency and high reliability communication requirements. Different SRCs 200 may use the same or different radio technologies.

The allocation/assignment of radio resources consists of time, frequency and spatial resources for devices using the two-tier architecture, where the FRC 100 in the top tier, allocates resources to multiple SRC 200 in the lower tier. Each SRC 200 is then directly responsible for resource assignment and medium access of devices under its control in the local cell. A FRC 100 does not directly govern the medium access for field devices, i.e., a FRC does not directly handle mission-critical communication. A FRC 100 may gather the QoS demands from multiple SRCs as well as may receive feedback on resource utilization and interference situation. With this global knowledge, the FRC 100 is able to allocate resources to the SRCs 200 in an optimal manner. The allocated resources are accordingly used by an SRC 200 in the local cell to govern medium access for devices of its associated device group in a manner to satisfy their QoS demands.

The SRCs 200 can support the Device-to-Device (D2D) communication paradigm for inter-device communication, i.e., an SRC may allow network assisted D2D. A single SRC 200 can coordinate multiple mission-critical automation applications provided that the overall communication requirements such as range, traffic QoS and capacity are satisfied. In contrast, the FRC coordinates several SRCs by managing resources among different local cells on a higher level in order to coordinate and minimize the interference between local cells.

The proposed methods for time-frequency-space resource allocation by the FRC 100 and the SRCs 200 allow synchronous and asynchronous patterns for exchange of information between the FRC 100 and the SRCs 200.

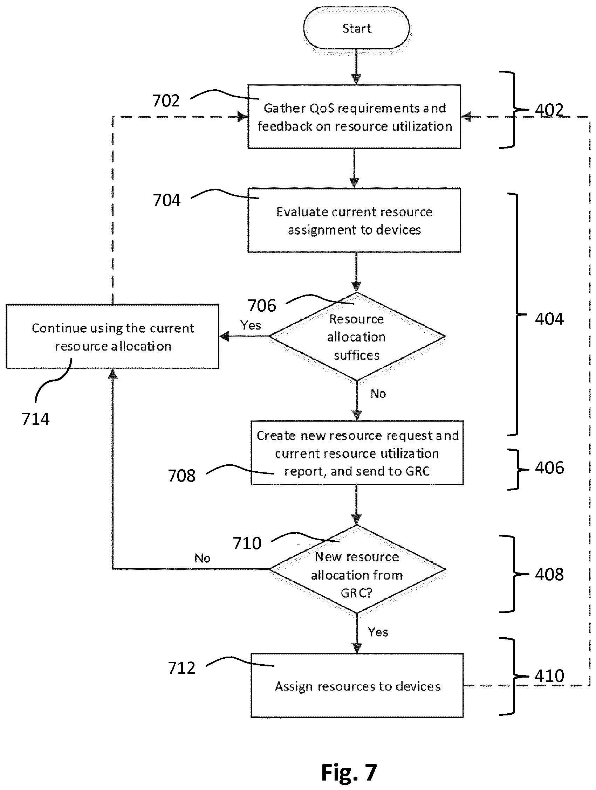

Fig. 7 shows a flowchart of a further embodiment as an exemplary implementation of the method of Fig. 4. The curly brackets indicate which steps in Fig. 7 represent an exemplary implementation of the steps shown in Fig. 4. In Fig. 7, the abbreviation GRC for Global Resource Indicator is used for the FRC (First Resource Coordinator).

In step 702, an SRC gathers the QoS requirements from the devices, e.g. the devices 504, 505, 506 as shown in Fig. 5, of its associated device group as well as feedback on the resource utilization, and spectral interference. This step can take place either at periodic instants of time or event-based on an explicit request. It can also be triggered on an event such as when the spectral interference exceeds a certain threshold, when new traffic requirements appear on a device, or when the resource utilization degrades beyond a certain margin.

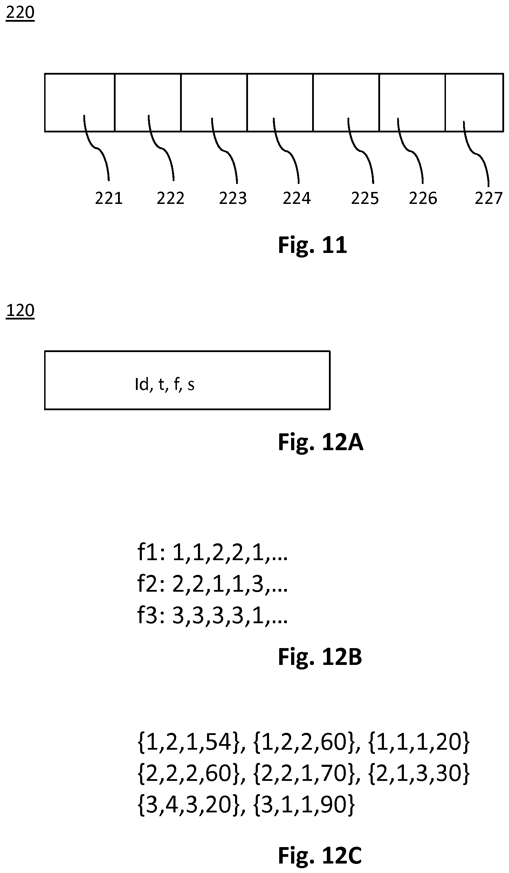

In step 704, an SRC 200 evaluates the resource assignment to devices and medium access of the devices based on the resource allocation as received from the FRC 100 via an allocation message. A possible format of such an allocation message will be described further below in connection with Fig. 12. The step 704 involves, for instance, computing a metric on how well the QoS requirements at the devices of its device group have been met. Methods and techniques for evaluating QoS requirement, e.g. based on QoS parameter values, are well known to the person skilled in the art.

Based on the assessment in step 704, an SRC 200 checks in step 706 whether or not the radio resources that had been allocated to this SRC 200 by the FRC 100 suffice for meeting the QoS requirements of its devices. If the allocated radio resources are sufficient to meet the QoS requirements of its devices, the current resource allocation scheme is continued to be used in step 714. If the allocated resources in step 706 are found to be insufficient, a new resource request is created and sent to FRC 100 along with the feedback on current resource utilization in step 708. The resource request may include feedback information, the feedback information being indicative of at least one of a resource utilization, a spectral interference situation and a reliability index of the devices of the associated group. This feedback information may, e.g. include the determined QoS parameter values or the values determined by the metric on how well the QoS requirements at the devices have been met. An exemplary message for this resource request is described further below in connection with Fig. 11.

If a new resource allocation message is received from the FRC 100 in step 710, a new assignment of resources to the devices of its device group is carried out in step 712 by the SRC 200. Otherwise the already allocated resources are continued to be used with the same assignment of resources to the devices.

During the course of operation, the SRC 200 continue to gather any updates on the new QoS requirements from the devices of its device group and keeps on monitoring the resource utilization behavior. An SRC 200 can also asynchronously receive a new resource allocation from the FRC 100, which could be resulting from the behavior on another SRC 200.

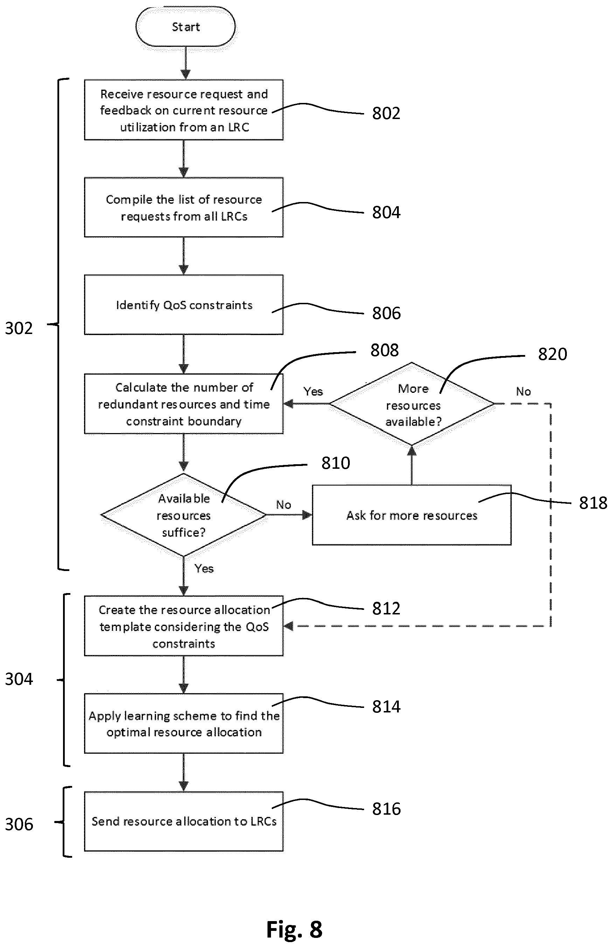

Fig. 8 shows a flowchart of a further embodiment as an exemplary implementation of the method of Fig. 3. In particular, Fig. 8 shows the functional steps carried out at the FRC 100. The curly brackets indicate which steps in Fig. 8 represent an exemplary implementation of the steps shown in Fig. 3. In Fig. 7, the abbreviation LRC for Local Resource Indicator is used for the SRC (Second Resource Coordinator).

In step 802, a FRC 100 receives a new resource request from an SRC 200, and/or feedback information on resource utilization at an SRC 200. The resource request or feedback information may arrive separately or coupled together. The resource request from an SRC 200 may arrive at a known instant of time (for instant, periodic or scheduled intervals) or asynchronously. The FRC 100 may also explicitly request one or more SRCs 200 to provide the recent resource requests. Feedback on spectral conditions can come from external sensors too and not necessarily from an SRC 200.

In step 804, the FRC 100 compiles a list of most recent resource requests from the SRCs 200 based on which it is supposed to allocate radio resources. In step 806, the FRC 100 identifies the QoS constraints, which eventually leads to determine the number of redundant resources and the total number of time slots.

In step 808, the FRC 100 calculates the number of redundant time-frequency resources, and the total number of timeslots originating from a time constrained boundary. In this step, the FRC 100 may identify the most time constrained resource request to determine the total number of slots in the allocation

Moreover, the FRC 100 calculates the number of redundant resources needed for each SRC to ensure the reliability requirements, e.g. provided as part of the QoS requirements of a particular SRC 200. It is noted that the number of redundant resources required also depends upon the quality of channels, and the allocated transmit power limits. A higher transmit power on one hand gives higher signal to noise ratio, which leads to lower bit error rate (and thus higher reliability) but on the contrary, a higher transmit power may introduce more interference to other devices, which tends to reduce the transmission reliability.

In step 810, the FRC 100 checks whether the radio resources that are available to the FRC for allocation to the SRCs are enough to satisfy the QoS requirements of the devices managed by the SRCs.

If the available resources suffice for meeting the QoS requirements of the devices, the FRC 100 determines an allocation of radio resources to each of the plurality of second radio coordinators by the first radio coordinator based on the compiled list of resource requests and determined feedback information.

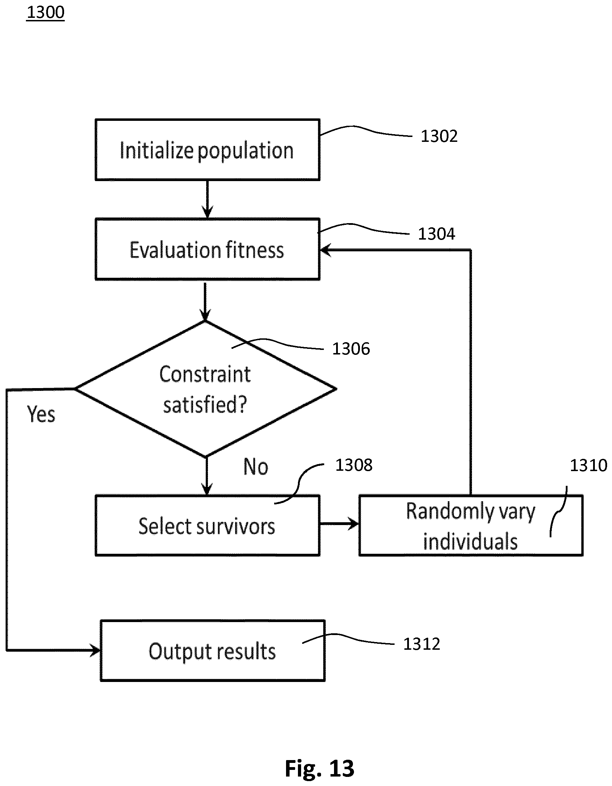

By way of example, the FRC 100 determines in step 812 an initial resource allocation for the SRCs 200, e.g. by creating a "resource allocation template" as described further below in more detail. Then, a machine learning procedure, e.g. a Genetic Algorithm, is used in step 814 for determining the optimal allocation of radio resources based on the total amount of available radio resources, the radio resource requests and the feedback information from the SRCs. For example, the optimal time-frequency-spatial resource allocation that leads to meeting the QoS requirements of the plurality of devices is determined. Further details are described further below in connection with Fig. 13.

In Step 816, the updated resource allocation is sent to SRCs 200. Fig. 12 describes an example for a message format that may be used for the allocation message sent in step 816.

In step 810, if the FRC 100 determines that the available radio resources are insufficient, it may request the spectrum management system for more resources in step 818.

If more resources are made available in step 820, the FRC 100 recalculates the QoS constrained in step 808 as described above. If more resources are not available to the FRC in step 820 that are sufficient to satisfy the QoS requirements, the FRC 100 can only find the best possible resource allocation for SRCs based on the already available radio resources.

As described above, the FRC 100 gathers the radio resource request comprising the QoS requirements of devices in each local cell as well as feedback information comprising information on the interference situation via the SRCs in step 802. Having a global knowledge of the QoS demands and the interference situation, the FRC 100 is able to allocate resources from the available pool of radio resources to the SRCs 200 accordingly in steps 812 and 814. In general, the FRC 100 allocates redundant time-frequency resources to the SRCs 200 in order to fulfill high reliability requirements. Moreover, the allocation of resources and the total number of timeslots take into account the latency constraints.

In the following, a very simple and non-limiting example is presented with two SRCs (IDs "1" and "2") and two frequency channels (f1 and f2) for illustration purposes. Please consider the two possible resource allocations:

First resource allocation: [f1: 1, 1; f2: 2, 2].
Second resource allocation: [f1: 1,1,2; f2: 2,2,1].

In the first resource allocation, the timing constraint allows repetition of two timeslots in a given channel while in the bottom resource allocation, the relatively relaxed timing constraint allows three timeslots in the allocation. If the quality of the two frequency channels is different, the bottom allocation allows both the SRCs to potentially benefit from the frequency channel with better quality. The exact assignment of resources to devices and medium access is governed by an SRC, it can implement a number of mechanisms how to best schedule its nodes given the allocation.

The FRC 100 analyzes all the resource requests to determine the most stringent timing constraint, and based on this decides on the total number of timeslots (T). The FRC 100 has the knowledge of the total available frequency channels (F) and thus, the total number of time-frequency radio resources (R) = T x F. The total number of radio resources are distributed to the SRCs 200 in the ratio of their requests. As will be described in connection with Fig. 12, the radio resource requests from the SRCs 200 can be quantified in terms of traffic loads, QoS requirements (cf. reliability and latency) and number of devices. The above resource allocation is referred to as the assignment template.

For illustrative purposes, a simple example with timeslot constraint resulting in T = 4, two frequency channels, i.e., F = 2 and two SRCs, i.e., N = 2 is described. It is assumed that quantifying the radio resource requests reveals that the first SRC with ID=1 requires three times more resources compared to the SRC with ID=2. This means that out of the total number of resources, R = 4x2= 8, six resources are assigned to SRC with ID=1 and two resources are assigned to SRC with ID=2. The resource template for this example can be expressed as, [1,1,1,1,1,1,2,2]. The FRC 100 can also determine if the available resources suffice to fulfill the QoS requirements of the field devices, and if it is not the case, it can potentially ask for more resources.

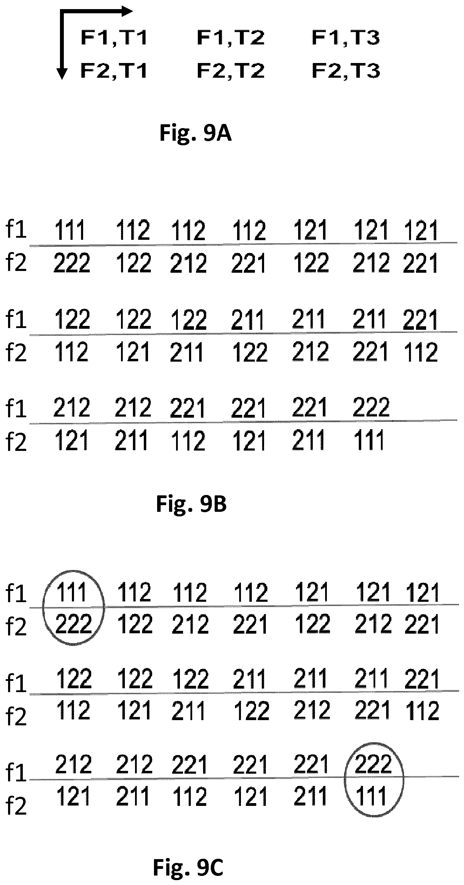

Fig. 9 schematically illustrates the allocation of time and frequency radio resources in a system with two SRCs.

In industrial automation application scenarios, traffic is usually dynamic and unpredictable, interference situation and deployment conditions are unique, and time varying. Due to the complexity and time-varying behavior of industrial applications, selecting optimal system parameters requires selecting parameters from a large subset. The possibilities of resource allocations can be fairly large, and analytical methods may not be easily tractable to model the traffic characteristics, interference situation, and the time-varying behavior for optimal resource assignment. In view of the foregoing, a communication system and its runtime behavior for such an industrial automation application scenario can be modeled beforehand only with limited accuracy. Known techniques for determining the resource allocations may be used, such as using look-up tables, heuristic techniques or analytical closed-form expressions for allocating the radio resources. However, such techniques may not result in the best resource allocation and parameter settings in view of the large solution space. In this context, machine learning and self-optimization methods have advantages over analytical methods.

In the following, a simple non-limiting example is given to highlight the resource assignment. For illustration purposes, a simple example is assumed wherein there are two SRCs (SRC 1 & SRC 2, hereinafter 1 & 2) having the same QoS requirements from devices in their local cells or device group. It is assumed that the total system resources available include three timeslots (T) and two frequency channels (F). For simplicity, the spatial resource, i.e., transmission (TX) power is not considered. In this example, there are overall six resources that can be allocated to two SRCs, and each SRC would have three resources at a given time. This is illustrated in Fig. 9A.

In Fig. 9B, all the 20 possible time-frequency resource allocations are listed. Each combination may have a unique implication on the interference situation when devices in local cells use these resources. The time-frequency allocations can be constrained to a smaller subset. For instance, assigning time-frequency resources so that there are least number of switchings, i.e., a preference for contiguous timeslots. Frequently switching on and switching off the radio has an overhead, which can be removed by imposing this constraint. The resulting possibilities are two which are highlighted/encircled in Fig. 9C, i.e., assigning dedicated frequency channels to the two cells. However, as described further below, often unequal resources are to be allocated.

In realistic deployment scenarios, often the number (N) of SRCs is larger than two. For instance, N= {4, 6, 8, 10, ...}, and the number of available frequency channels, F= {4, 6, 8,...}, and timeslots, T= {5, 10, 15, ...}. Based on a more realistic example of F=4, T=5, N=4, the total number of possibilities are 11732745024, which is a fairly large solution space to choose from. However, when applying the constraint of least number of channel switchings, the number of possibilities are reduced down to 24 in this example.

In general, the number of resource allocation possibilities (Num_resources) can be expressed mathematically. Let R denotes the number of time-frequency resources and L1, L2, ... LN denotes the number of resources assigned to each of the SRCs. Then,

$$(\text{Formula 1}) \qquad \text{Num\_resources} = R!/(L1!L2!..LN!)$$

For the above two examples,

$$(\text{Formula 2}) \qquad \text{Num\_resources} = ((3 \times 2)!)/3!3! = 20$$

$$(\text{Formula 3}) \qquad \text{Num\_resources} = ((5 \times 4)!)/5!5!5!5! = 11732745024.$$

The above example relates to a simplified case provided for illustration purposes, where the transmit power levels are not considered and all the SRCs have same traffic characteristics.

According to one exemplary implementation of the proposed method and system architecture, the possible transmit power levels for each device are 64. With different number of devices associated with an SRC, non-homogenous traffic QoS requirements and varying quality of frequency channels, the resource allocation possibilities become very large, and thus simple analytical approaches become less and less suited to find the optimal set of resource allocations. In view of the foregoing, machine-based learning techniques are particularly well suited for finding the optimal set of resource allocation. An example thereof based on a Genetic Algorithm will be explained further below.

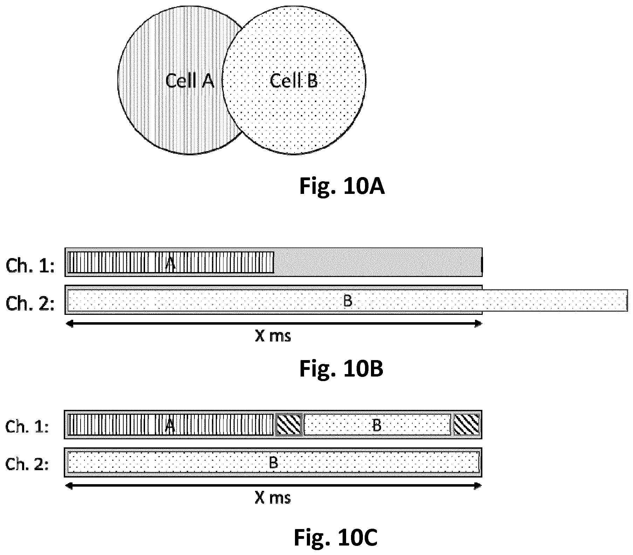

Fig. 10 schematically illustrates non-homogeneous resource requirements of two local radio cells. In the examples described above in connection with Fig. 9, homogeneous resource requirements across the local cells have been assumed. In realistic deployments, different number of devices can be associated with different SRCs, and this may also change over time. Moreover, the traffic QoS requirements in different local cells or device groups can be different at different time instants. Assuming again a simple example of two local cells A and B with unequal resource requirements as shown in Fig. 10A. As shown in Fig. 10B, dedicated frequency resource allocation, i.e., Channel 1 (Ch.1) to Cell A and Channel 2 (Ch.2) to Cell B is sub-optimal as with this allocation, the time-constrained of X ms for the traffic in Cell B cannot be satisfied. A valid resource allocation would be that within the X ms time constraint, part of Ch.1 is allocated to Cell B as shown in Fig. 10C.

Fig. 11 schematically illustrates the message format 220 sent from a SRC to a FRC according to an embodiment. This message corresponds to the message sent in step 406 of Fig. 4 or in step 708 of Fig. 7 as described above.

The FRC 100 preferably gathers the QoS requirements from all the SRCs 200 in order to carry out the resource allocation. Moreover, the FRC preferably also considers a feedback on how well the current utilization of resources has been in each local cell when determining the allocation of radio resources. This allows the FRC 100 to re-allocate resources accordingly, and send this information to the SRCs 200. The bidirectional information exchange between SRCs 200 and FRC 100 can take place asynchronously or at periodic instants of time. The information exchange intervals can also be re-configured at runtime. The resource allocation follows a semi-persistent behavior, i.e., unless a new update on resource allocation is received, the SRCs continue using the previous resource allocation in their respective local cells. A new resource allocation is typically sent from a FRC 100 when the service requirements at one of the SRCs 200 have changed and/or the feedback on the resource utilization at an SRC warrants a reallocation of the radio resources. It may be noted that the FRC, when determining the radio resource allocation, if possible, tends to keep the same resource allocation for a particular SRC, when its QoS requirements are satisfied. However, the global context, i.e. the overall system view on all SRCs and changes at another SRC in particular may affect the resource allocation for other SRCs as well.

In the following, an information exchange and data structures used in an exemplary implementation of the proposed method and SRC apparatus is described. It is however emphasized, that the information exchange and the specific data structures should not be seen as the only implementation possibility of the method. Other data structures, data field sizes and additional metrics as the format of the resource request may be used.

The message generated by an SRC 200 and sent to the FRC 100 consists of following data fields in the exemplary implementation, as shown in Fig. 11:

A first data field 221 comprising addressing information, e.g. the device address. By way of example only, this may be a 16bit address. It can also be an IP address. A second data field 222 comprising the number of associated field devices: e.g. indicating how many field devices are associated with the SRC. By way of example only, this information can be provided using any number in the range: 0-255, or a number higher than 255. A third data field 223 comprising information on the traffic load, in particular the overall traffic load at the SRC or in a local cell. This could be provided using e.g. the average data rate. A fourth data field 224 comprises traffic QoS requirements. By way of example only, 16 bits are used for indicating the latency as well as reliability requirements. A fifth data field 225 comprising location information, e.g. geo-context information. A sixth data field 226 comprises a QoS feedback index. This metric (using 16 bits by way of example, only) essentially indicates the achieved, i.e., past QoS requirements. A seventh data field 227 comprises interference levels. This metric indicates how much overall interference was encountered. When the devices are not using the given frequency-time resource, they can measure RSSI (received signal strength indicator). The spectral conditions can also be monitored using dedicated spectrum sensors or a radio environmental map (REM).

The second to fifth data fields 222-225 are thus indicative of radio resources required by the SRC and correspond to the radio resource request. The sixth to seventh data fields 226 and 227 correspond to the feedback information.

Fig. 12 schematically illustrates exemplary message formats of the allocation message sent by the FRC to one or more SRCs according to an embodiment.

The following description is based on an exemplary implementation. The proposed method is not limited to the message formats as described herein. The allocation message 120 comprises data determining the time slot and frequency assignment and transmit power level to be used by the SRCs. For this purpose, the allocation message 120 may indicate the frequency (f), the number of timeslots (f), the SRC address (id) and the transmit power level (s), e.g. for each time slot and frequency combination, cf. Fig. 12A. The data structure proposed is dynamic and can handle any number of SRCs, any number of frequency channels and/or timeslots. The transmit power is set in a scale from 0-100 and mapped to the dBm scale.

An exemplary message format (for a FRC to SRCs communication) may thus have the following form as shown in Fig. 12B, wherein f1, f2, f3 correspond to different frequency bands (frequency channels) and the column (items separated by comma) correspond to time slots, which may be used by a certain SRC for reception and/or transmission within its respective coverage area or cell. Hence, in the example message format illustrated in Fig. 12B, the first two slots (in frequency channel f1) are assigned to an SRC with ID or address "1" in frequency channel 1, the next two slots are assigned to an SRC with ID "2" in frequency channel f1, and then again, the SRC with ID "1" is assigned to use the time slot in frequency channel f1. In frequency channel f3, the first four time slots are assigned to an SRC with ID "3" and the fifth time slot is assigned to another SRC with ID "1" again.

Another exemplary message format for a FRC to SRCs communication has the form as shown in Fig. 12C. The first item in the brackets represents the frequency band, the second item the number of time slots assigned to a respective FRC and the third item the ID of the respective SRC. The fourth item represents the transmit power allowed. Of course, the order of the items may be changed. Thus, the first bracket in the first line assigns to the SRC with ID "1" two consecutive slots in frequency f1, wherein both slots have the transmit power limit of 54. If the transmit power is supposed to be different for the two slots, e.g. transmit power shall be changed, e.g. from 54 to 55. Instead of one message of the form {1,2,1,54}, two assignment message of the form {1,1,1,54}, {1,1,1,55} are used (subsequently (as two assignment messages), or within one assignment message) to the respective SRC indicating a transmit power change. The first assignment message indicating a transmit power of 54 and the second assignment message indicating a transmit power of 55. Other values of the transmit power, the frequency band, and the number of time slots are possible as well. The assigned time-frequency and/or the spatial resources, obtained through transmission power setting (TX) may be used in a persistent way, i.e., SRCs may use them until a new update is received. A single allocation message 120 may be sent containing information for all SRCs. The SRCs may later use this information to assign the resources to their associated process/field devices accordingly. According to a further aspect, the allocation message may include further information specifying the spatial resources, e.g. including directional communication and spatial multiplexing aspects, where the resource allocation to SRCs would additionally include beam coverage regions appropriately.

Furthermore, the number of time slots allowed to use in each frequency channel by a certain SRC may be selected dynamically and/or may be based on a latency constraint indicated in the traffic QoS demands from said SRC. This means that e.g., based on the industrial application controlled in a cell managed by an SRC, multiple (consecutive) time slots in a first frequency channel may be assigned, e.g, in order to guarantee a timing requirement for said industrial application. The frequency channel may furthermore be selected based on its channel characteristics, that is to say the signal quality achieved via said channel.

Fig. 13 shows a flowchart for a Genetic Algorithm used for determining the resource allocation according to an embodiment.

As mentioned above, machine-based learning techniques are particularly well suited for finding the optimal set of resource allocation that has to be selected from a large solution space. An example thereof based on a Genetic Algorithm (GA) is discussed in more detail. The use of GAs is a technique known in the art. A GA is a biologically inspired evolutionary algorithm based on the Darwinian principle of "survival of the fittest". In the GA implementation, a population of the candidate solutions to the system parameters is evolved towards an optimal solution. Each candidate has attributes of the radio resource allocation, which is iterated over resource usage feedback cycles to result in the optimal solution, i.e., the optimal time-frequency-spatial resource allocation that leads to meeting the QoS requirements of the field devices.

What is considered the optimal solution, i.e. the optimal radio resource allocation, may vary based on which factors are considered most important, such as reducing communication overhead (time-frequency switchings), spectral interference, fulfillment of QoS requirements, energy efficiency, etc. A multivariable weighting function for the fitness function can be used, as described below, wherein different influencing factors or parameters and their corresponding weighting factors are combined to define what is considered an optimal solution.

The GA used for determining the resource allocation at the FRC according to an embodiment comprise the steps shown in Fig. 13:

In step 1302, the population is initialized, i.e. a plurality of members (individuals) of an initial population is generated. Each member determines an allocation of radio resources to each of the plurality of SRCs 200. Each radio resource allocation is defined by an allocation of time and frequency, preferably also spatial radio resources according to this embodiment. When generating the initial population, only those members, i.e. radio resource allocations, are considered that do not exceed a total amount of radio resources that are available to the FRC in order to allocate them to the SRCs and that fulfills a QoS requirement (reliability and latency constraints) as required by the SRCs (cf. corresponding paragraphs in connection with Fig. 8) for assigning the radio resources to their associated device group.

In the non-limiting example implementation, the GA population is initialized randomly using the "template resource allocation" as described in step 812 of Fig. 8. The maximum allowed transmit power limit is set to 75% for the initial population in the exemplary embodiment.

In step 1304, the fitness of the population members is evaluated. A fitness value for each member, i.e. for each resource allocation, in the current population is determined using a fitness function. A fitness value for each member means that the fitness function assesses the resource allocation for all the SRCs jointly to assess the fitness of a population member.

As the fitness function, a multivariable weighting function (W), also referred to a utility function, is defined for assessing the radio resource allocation.

$$\text{(Formula 4)} \qquad W = w1*P1 + w2*P2 + w3*P3 + w4*P4 + ...+ wi*Pi$$

Here, the parameters, P1, P2... Pi, are the influencing factors or parameters and w1, w2...wi are their corresponding weights indicating the importance or unimportance of the parameters. The weighting factors could be pre-selected based on the network scenario itself and can also be adapted later on according to the deployment setup and channel characteristics. The values for the weighting factors are in the range [0, 1] and are normalized so that their sum equals to 1, $\sum_i w_i = 1$.

As a non-limiting example, these parameters (Pi) include the following:

- A first parameter P1, which is a parameter indicating the inverse of the transmission power levels, i.e., it models the coverage range;
- A second parameter P2, assessing the time-frequency allocations for the SRCs. For example, the parameter P2 may be a metric that favors the least number of frequency switchings at the SRC level for a given resource allocation. For instance, this parameter may determine the number of time-frequency switchings for a given resource allocation for the plurality of SRCs. For example, in the simplified example of Fig. 9c, the population includes 20 different members of time-frequency allocations all satisfying the QoS requirements. However, only the encircled time-frequency radio resource allocations would have a parameter value for P2 of zero, since no channel switchings are required for each SRC "1" and "2". The other possible radio resource allocations shown in Fig. 9C also satisfy the QoS requirements but result in more channel switchings. For example, the second time-frequency allocation (f1:112; f2: 122) in Fig. 9C has a value of 2 for P2. The fitness function W will therefore calculate a higher value for the parameter P2 for the non-encircled time-frequency allocations in Fig. 9C in order to favor the least number of frequency switchings at the SRC level for a given resource allocations. However, due to the other influencing factors P1, P3 and P4 in W, one or more of the non-encircled time-frequency allocations of Fig. 9C may nevertheless yield a higher overall fitness value, depending on the value for the other parameters P1, P3 and P4 of the fitness function.

- A third parameter P3 which indicates how well the QoS requirements have been achieved with the current allocation. For example, a reliability index (e.g. a packet error ratio, i.e., a lower value is desired) could be used. It should be noted that due to appropriately introduced redundancy of resources, the overall reliability may remain very high. Owing to the mission-critical nature of the industrial automation applications, no transmission is scheduled in an interval that exceeds the latency constraint, therefore outages on latency are not counted in the exemplary embodiment;

- A fourth parameter P4 that indicates the level of spectral interference. One of the coordination goals for the FRC is to minimize the spectral interference among local cells, which implicitly supports meeting the QoS requirements.

If it is apparent to a person skilled in the art that other factors may be included in a flexible manner as needed.

However, the exemplary embodiment uses the utility function of above four factors that include an assessment/a metric of the time-frequency-spatial radio resource allocation itself based on parameters P1 and P2 as well as a feedback metric that assesses the current resource utilization and spectral conditions based on parameter P3 and P4 that would result from a given radio resource allocation.

The calculation of the parameter values P3 and P4 is based, where available, on the feedback information on the resource utilization and spectral conditions that is included in the feedback information from the SRCs. The FRC has access to a database wherein for each possible resource allocation, corresponding values for the parameters P3 and P4 are stored (or at least feedback information based on which the parameter values can be calculated) that have been received from the SRCs. Over time, the FRC receives more and more feedback information which is used to update the database so that the GA learns over time (in multiple iterations) which resource assignment in view of the total amount of available radio resources best satisfies the QoS requirements and can adapt automatically to any runtime changes of deployment conditions and variations in traffic characteristics, if necessary.

When the database does not yet comprise respective parameter values for a given radio resource allocation, two options exist to determine the fitness value in such a situation:

Firstly, in an initialization phase, test traffic transmissions are carried out for different radio resource allocations in order to generate feedback data. This feedback data can be used until it is replaced by feedback data generated based on real traffic in the system. Secondly, feedback information received on the resource utilization and the level of spectral interference for the currently applied radio resource allocation settings is used. Again, the GA, by gathering more and more feedback data over time, will learn over time which radio resource allocation will likely generate which feedback information so that the fitness of the population members will become more and more accurate over time.

It is noted that for the initialization phase, a random initialization from a set of valid values for the radio resource allocation may be used. The GA learns over time in subsequent iterations and converges towards an optimal solution. Alternatively, instead of a random initialization, an educated initialization for the radio resource allocation may be used, based on suitable rules or heuristics.

The weighting function can be computed at regular periodic instants of time or it can be event-based, i.e., computed every time a new radio resource request or feedback from an SRC is received at the FRC. If there is no need for reallocation of radio resources, the SRCs keep using the last radio resource allocation update in a persistent manner.

The weights w1, w2, w3 and w4 are chosen as a non-limiting example prototype implementation to be 0.1, 0.4, 0.25 and 0.25, respectively. The goal of the GA is to minimize the fitness function.

In step 1306, it is determined whether the current population includes a member that satisfies the fitness constraint, i.e. if the optimal solution has been found or a solution with a fitness value being higher than a predetermined threshold value. If yes, this member, i.e. radio resource allocation, is selected in step 1312 and sent to the SRCs 200 using the allocation message.

If no, then new populations are generated according to steps 1304 - 1312 until the fitness constraint is satisfied.

According to a general principle of any GA, fitter parents are used to reproduce children (offspring) and the least fit population members are removed. This is the Darwinian principle of survival of the fittest upon which a GA is based.

Thus, in step 1308, a reproduction population is generated by selecting members, i.e. resource allocations, from the initial population with probability proportional to their fitness values. Individuals (member of a population) not satisfying the fitness constraints are not carried forward.

Thus, in step 1310, a successor population from said reproduction population is generated, said successor population comprising a plurality of members, i.e. resource allocations, created as offspring. New members are created through the processes of recombination (crossover) and/or of mutation from existing members, i.e. from resource allocations selected from the reproduction population based on their fitness values.

By way of example, for the successor population, two parents out of the fittest parents may be picked with bias towards fitter parents (higher value of the fitness function) to generate two offspring through the process of crossover, i.e. where the genes, i.e., attributes, of parents are combined. The attributes of parents contain the time-frequency-space radio resources. The offspring are inserted in the new population replacing the old least fit population members.

By way of example, assuming that the first two time-frequency allocations (member 1- f1:111; f2: 222; member 2- f1: 112; f2 122) depicted in Fig. 9C have a high fitness value and have been chosen a "parents" to create a new offspring. Then, for the recombination process, either of the two time-frequency allocations can be selected in the offspring. The spatial resource allocation may be selected from the other parent wherein a "mutation" may be applied. The mutation is applied in a random manner based on the defined mutation rate. For a mutation rate of 0,01%, only in 0,01% of the cases, a mutation to the resource allocation will be applied, e.g. by altering the transmit power level and/or the spatial multiplexing as part of the spatial resource allocation.

Alternatively or additionally, the GA can be implemented as follows:
According to the exemplary implementation of the GA, the solution space consists of the valid discrete values (parameter settings) for the radio resource allocations. Any solution picked up from this solution space can be applied to the system. The GA aims for finding the solution out of a potentially very large solution space, which gives optimal performance and satisfies the QoS requirements.

While producing new population members, they undergo random changes to the genes (radio resource allocations) with a mutation rate. By way of example only, a mutation rate of 0.01% rate has been used for an exemplary implementation of the GA according to Fig. 13.

How many new population members are produced, and how many old population members are removed from the total set of population in steps 1308 and 1310 may vary from embodiment to embodiment. According to an exemplary implementation of the GA according to Fig. 13, 50% new population members are produced from the fittest population members (parents) where a population size of 1000 is used. The new population members replace the 50% most unfit population members in each iteration.

The above mentioned exemplary values for the initial value for transmit power limit, mutation rate, replacement rate and population size should be construed as an non-limiting exemplary showing, explaining the embodiment, rather than a limitation on the embodiment.

While producing new population members, according to step 1310, they undergo random changes to the genes, i.e. the radio resource allocation, with the applied mutation rate.

The recombination and/or mutation may be based on the aspect that the time and frequency allocations are governed by the so called "rank" that measures the time-frequency switchings of a given resource allocation. For instance, in the simplified example in Figure 9, the rank for the combination in 1st row, first column and 1st row, 2nd column is zero and two, respectively. In more realistic cases, there are higher values, e.g. like 10 or 15.

Combining the two resource allocations of two parents may result in an offspring with a resource allocation having a new rank value, e.g. rank 11. Applying an additional mutation to this rank would mean, that instead of the rank 11 as coming out of the reproduction process in an offspring member from the two parents, it can be changed/mutated to another valid rank value. The chances of this happening are low and correspond to the mutation rate. Having undergone mutation thus results in another rank value according to this exemplary implementation, which corresponds to another time-frequency allocation. It is noted that there might be multiple time and frequency allocation options for a given valid rank. According to the exemplary embodiment, the time-frequency allocation for the given rank is simply picked up randomly.

The GA then proceeds again with step 1304 to generate a fitness value for each member, i.e. resource allocation, in the successor population using said fitness function; and repeating the steps of generating a reproduction population, generating a successor population, and generating a fitness value for each member in the successor population until the successor population meets a threshold.

At the end of the cycle, the fittest population member is picked up as the solution. This solution consists of the time-frequency-spatial resource allocation, which leads to satisfying the QoS requirements, and imparts least interference. Since the resource allocation framework is based on an evolutionary algorithm, it is inherently able to adapt to the changing traffic characteristics, interference situation and other system dynamics.

The population member of the successor population having the best fitness value as determined by the fitness function, or possibly the member meeting the baseline fitness criterion, is selected as the optimal solution, i.e. as the resource assignment in the given GA iteration.

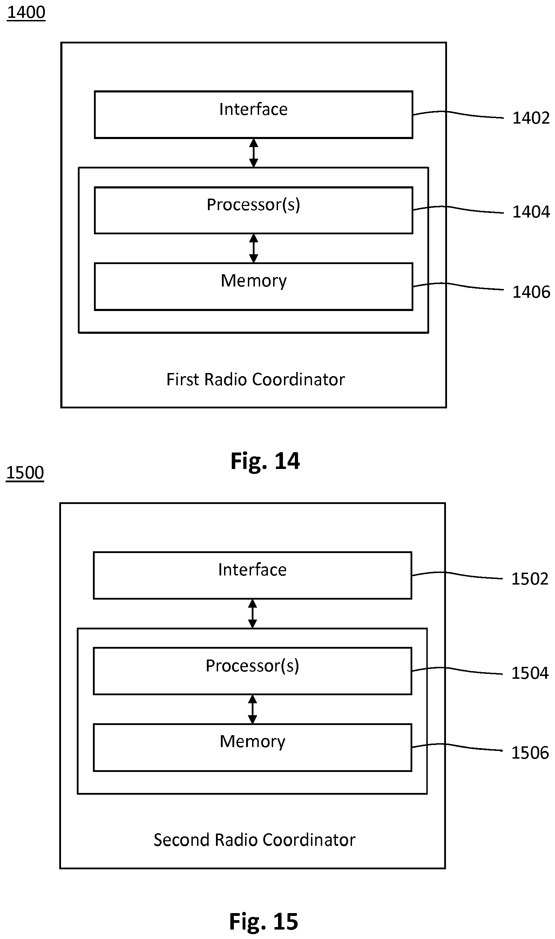

Fig. 14 shows a schematic block diagram for an embodiment of a device, herein referred to as the first radio resource coordinator 1400. The first radio resource coordinator 1400 comprises one or more processor(s) 1404 for performing the method 300 and memory 1406 coupled to the processor(s) 1404. For example, the memory 1406 may be encoded with instructions that implement at least one of the modules 104, 106 and 108. The first radio resource coordinator device 100 may further comprise an interface 1402 for the radio communication with the second radio coordinator 1500.

The one or more processor(s) 1404 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the first radio coordinator, such as the memory 1406, functionality of a transmitting station. For example, the one or more processor(s) 1404 may execute instructions stored in the memory 1406. Such functionality may include providing various features and steps discussed herein, including any of the benefits disclosed herein. The expression "the first radio coordinator being operative to perform an action" may denote the first radio resource coordinator 1400 being configured to perform the action.

Fig. 15 shows a schematic block diagram for an embodiment of a device, herein referred to as the second radio resource coordinator 1500. The second radio resource coordinator 200 comprises one or more processor(s) 1504 for performing the method 400 and memory 1506 coupled to the processor(s) 1504. For example, the memory 1506 may be encoded with instructions that implement at least one of the modules 208 and 210. The second radio resource coordinator 1500 may further comprise an interface 1502 for the radio communication with the first radio coordinator 1400 and with the devices of its associated device group.

The one or more processor(s) 1504 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the second radio coordinator, such as the memory 1506, functionality of a receiving station. For example, the one or more processor(s) 1504 may execute instructions stored in the memory 1506. Such functionality may include providing various features and steps discussed herein, including any of the benefits disclosed herein. The expression "the device being operative to perform an action" may denote the second radio coordinator 1500 being configured to perform the action.

As has become apparent from above description of exemplary embodiments, the technique can provide a method for allocating radio resources that allows meeting the QoS requirements of low-latency and high reliability radio communication in industrial automation applications. The technique can be embodied to distinguish between governing coarse grained coordination of radio resources on a broader operational area in the first tier for which a first radio coordinator is responsible and managing fine-grained assignment of radio resources for a plurality of field devices in a second tier, for which the second radio coordinators are responsible. Embodiments can reduce the otherwise required high efforts for the system level model and analytical work and enable faster solutions.

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention should be limited only by the scope of the following claims.

**Claims**

1.  A method (300) of allocating radio resources in a radio access network for operating a plurality of devices, comprising the steps of:

    determining (302), by a first radio coordinator (100; 1400), a need for radio resources for each of a plurality of second radio coordinators (200; 1500) for assigning the radio resources to an associated device group (507; 508), wherein the plurality of devices are grouped into a plurality of device groups (507, 508), each device group (507; 508) being associated to one of the plurality of second radio coordinators (200; 1500), wherein every device of the plurality of device groups corresponding to a time-critical industrial automation application is associated with a common second radio coordinator of the plurality of second radio coordinators, wherein the step of determining the need for radio resources comprises receiving (802), by the first radio coordinator (100; 1400) from at least one of the plurality of second radio coordinators (200; 1500), a radio resource request, wherein the radio resource request is indicative of radio resources required by the at least one of the plurality of second radio coordinators (200; 1500) for assigning the radio resources to its associated device group (507; 508);
    allocating (304) the radio resources to each of the plurality of second radio coordinators (200; 1500) by the first radio coordinator (100; 1400) based on the determined need for radio resources; and
    sending (306), to at least one of the plurality of second radio coordinators (200; 1500), an allocation message (120) indicative of the allocated radio resources.

2.  The method (300) of claim 1,

    wherein the allocated radio resources are specified in terms of at least one of time, frequency and spatial resources, and/or,
wherein the plurality of devices includes at least one of an actuator (506) configured for wireless communication, a sensor (505) configured for wireless communication and a programmable logic controller (504) configured for wireless communication of an industrial automation application.

3. The method (300) of any one of claims I and 2, wherein the need for radio resources is determined based on the received radio resource request, and optionally,
wherein the step (302; 304) of determining the need for radio resources or allocating the radio resources to the plurality of second radio coordinators (200; 1500) comprises determining a number of time slots allowed to use in each frequency channel by a certain second radio coordinator (200; 1500) based on a latency constraint indicated in the radio resource request received from said second radio coordinator (200; 1500).

4. The method (300) of any one of claims 1 to 3 wherein the step (302) of determining the need for radio resources comprises receiving (802), by the first radio coordinator (100; 1400), a feedback information from the at least one of the plurality of second radio coordinators (200; 1500), the feedback information being indicative of at least one of a resource utilization, a spectral interference situation and a reliability index of the devices of the associated device group (507; 508) of the at least one of the plurality of second radio coordinators (200; 1500), wherein the need for radio resources is determined based on the received feedback information.

5. The method (300) of any one of claims 1 to 4, wherein the step (304) of allocating the radio resources to the plurality of second radio coordinators (200; 1500) comprises a machine learning procedure used for determining the allocation of radio resources.

6. The method (300) of claim 5, wherein the machine learning procedure includes or is based on a genetic algorithm (1300), comprising

generating (1302) a plurality of members of a population, each member corresponding to an allocation of the radio resources to each of the plurality of second radio coordinators (200; 1500); and
evaluating (1304) the members based on a fitness function, the fitness function assessing the radio resource allocation corresponding to a member of the population, optionally based on at least one of

(a) a metric that favors a least number of frequency switching at the level of the second radio coordinator (200; 1500), and
(b) a metric that favors radio resource allocations that result in higher resource utilization, fewer spectral interference and/or a higher reliability index for the communication at the plurality of second radio coordinators (200; 1500).

7. The method (300) of any one of claims 1 to 6,

wherein the step (302) of determining the need for radio resources comprises determining, for each of the second radio coordinators (200; 1500), a number of redundant radio resources needed for each of the plurality of second radio coordinators (200; 1500) to ensure a transmission reliability requirement, and/or
the method (300) further comprising or triggering the step of determining (808, 810), based on the determined need for radio resources, if the radio resources available to the first radio coordinator (100; 1400) for allocation to the plurality of second radio coordinators (200; 1500) are sufficient to fulfill a criteria indicative of a quality of service requirement of the plurality of devices, and if not, requesting (818), by the first radio coordinator (100; 1400), more radio resources from a spectrum managing system.

8. A method (400) of assigning radio resources in a radio access network for operating a plurality of devices, comprising the steps of:

sending (406; 708), from a second radio coordinator (200; 1500) to a first radio coordinator (100; 1400), a radio resource request, the radio resource request being indicative of radio resources required by the second radio coordinator (200; 1500) for assigning the radio resources to devices of its associated device group (507; 508);
receiving (408), at the second radio coordinator (200; 1500), an allocation message (120) from the first radio coordinator (100; 1400), the allocation message (120) being indicative of the radio resources allocated to the second radio coordinator (200; 1500); and
assigning (410), by said second radio coordinator (200; 1500), radio resources to the devices of its associated device group (507; 508) based on the radio resources allocated to said second radio coordinator (200; 1500) according to the received allocation message (120), wherein the plurality of devices are grouped into a plurality of device groups (507; 508), each device group (507; 508) being associated to one of the second radio coordinators (200; 1500), and wherein every device of the plurality of device groups corresponding to a time-critical industrial automation application is associated with same second radio coordinator of the second radio coordinators (200; 1500).

9. The method (400) of claim 8,

wherein said step of allocating the radio resources comprises assigning at least one of timeslots and frequency channels and/or spatial radio resources to the devices of the associated device group (507; 508), and/or, wherein the plurality of devices includes at least one of an actuator (506) configured for wireless communication, a sensor (505) configured for wireless communication and a programmable logic controller (504) configured for wireless communication of an industrial automation application, and/or, wherein each of the device groups (507, 508) corresponds to a local cell (503) of devices that cover one or more industrial automation processes.

10. The method of claim 8 or 9, further comprising or triggering at least the step of determining (704; 706), by the second radio coordinator (200; 1500), whether the radio resources allocated to the second radio coordinator (200; 1500) are sufficient to meet a quality of service requirement of the devices of its associated device group (507; 508), and if not, sending (406; 708) the radio resource request.

11. The method of any one of claims 8 to 10, further comprising or triggering the step of:
sending (406; 708), from the second radio coordinator (200; 1500) to the first radio coordinator (100; 1400), a feedback information, the feedback information being indicative of at least one of a resource utilization, a spectral interference situation and reliability index of the devices of the associated device group (507; 508) of the second radio coordinator (200; 1500).

12. The method of any one of claim 10 or 11, further comprising or triggering the steps of:

retrieving (402; 702), by the second radio coordinator (200; 1500), an information from the devices of its associated device group (507; 508), wherein the information is indicative of at least one of a quality of service requirement, a resource utilization and a spectral interference situation of the devices of its associated device group (507; 508); and
determining (404; 704, 706, 708) at least one of the radio resource request and the feedback information based on the retrieved information.

13. The method of any one of claims 8 to 12, wherein the second radio coordinator (200; 1500) is assigning the radio resources to the devices of its associated device group (507; 508) on a time-scale faster than the time-scale at which the second radio coordinator (200; 1500) receives allocation messages (120) from the first radio coordinator (100; 1400).

14. A first radio coordinator (100; 1400) for allocating radio resources in a radio access network for operating a plurality of devices,
configured to perform the steps of

determining a need for radio resources for each of a plurality of second radio coordinators (200; 1500) for assigning the radio resources to an associated device group (507; 508), wherein the plurality of devices are grouped into a plurality of device groups (507, 508) each device group (507; 508) being associated to one of the plurality of second radio coordinators (200; 1500), wherein every device of the plurality of device groups corresponding to a time-critical industrial automation application is associated with same second radio coordinator of the plurality of second radio coordinators, wherein the step of determining the need for radio resources comprises receiving, by the first radio coordinator (100; 1400) from at least one of the plurality of second radio coordinators (200; 1500), a radio resource request, and wherein the radio resource request is indicative of radio resources required by the at least one of the plurality of second radio coordinators (200; 1500) for assigning the radio resources to its associated device group (507; 508);
allocating the radio resources to each of the plurality of second radio coordinators (200; 1500) based on the determined need for radio resources; and

sending, to each of the plurality of second radio coordinators (200; 1500), an allocation message (120) indicative of the allocated radio resources.

15. The first radio coordinator (100; 1400) of claim 14 further configured to perform the steps of any one of claims 2 to 7.

16. A second radio coordinator (200; 1500) for assigning radio resources in a radio access network for operating a plurality of devices,
configured to perform the steps of

sending, from the second radio coordinator (200; 1500) to a first radio coordinator (100; 1400), a radio resource request, the radio resource request being indicative of radio resources required by the second radio coordinator (200; 1500) for assigning radio resources to devices of its associated device group (507; 508);
receiving an allocation message (120) from the first radio coordinator (100; 1400), the allocation message (120) being indicative of the radio resources allocated to the second radio coordinator (200; 1500); and
assigning radio resources to the devices of its associated device group (507; 508) based on the radio resources allocated to said second radio coordinator (200; 1500) according to the allocation message (120), wherein the plurality of devices is grouped into a plurality of device groups (507; 508), each device group (507; 508) being associated to one of the second radio coordinators (200; 1500), and wherein every device of the plurality of device groups corresponding to a time-critical industrial automation application is associated with same second radio coordinator of the second radio coordinators (200; 1500).

17. The second radio coordinator (200; 1500) of claim 16, further configured to perform the steps of any one of claims 9 to 13.

**Patentansprüche**

1. Verfahren (300) zur Zuweisung von Funkressourcen in einem Funkzugangsnetzwerk zum Betreiben einer Mehrzahl von Vorrichtungen, umfassend die folgenden Schritte:

Bestimmen (302) eines Bedarfs an Funkressourcen durch einen ersten Funkkoordinator (100; 1400) für jeden einer Mehrzahl von zweiten Funkkoordinatoren (200; 1500) zum Zuordnen der Funkressourcen zu einer assoziierten Vorrichtungsgruppe (507; 508), wobei die Mehrzahl von Vorrichtungen in eine Mehrzahl von Vorrichtungsgruppen (507, 508) eingeteilt ist, wobei jede Vorrichtungsgruppe (507; 508) mit einem der Mehrzahl von zweiten Funkkoordinatoren (200; 1500) assoziiert ist, wobei jede Vorrichtung der Mehrzahl von Vorrichtungsgruppen, die einer zeitkritischen industriellen Automatisierungsanwendung entspricht, mit einem gemeinsamen zweiten Funkkoordinator der Mehrzahl von zweiten Funkkoordinatoren assoziiert ist, wobei der Schritt des Bestimmens des Bedarfs an Funkressourcen ein Empfangen (802) einer Funkressourcenanforderung durch den ersten Koordinator (100; 1400) von mindestens einem der Mehrzahl von zweiten Funkkoordinatoren (200; 1500) umfasst, wobei die Funkressourcenanforderung Funkressourcen angibt, die von dem mindestens einen der Mehrzahl von zweiten Funkkoordinatoren (200; 1500) zum Zuordnen der Funkressourcen zu seiner assoziierten Vorrichtungsgruppe (507; 508) benötigt werden;
Zuweisen (304) der Funkressourcen zu jedem der Mehrzahl von zweiten Funkkoordinatoren (200; 1500) durch den ersten Funkkoordinator (100; 1400) basierend auf dem bestimmten Bedarf an Funkressourcen; und
Senden (306) einer Zuweisungsnachricht (120), die die zugewiesenen Funkressourcen angibt, an mindestens einen der Mehrzahl von zweiten Funkkoordinatoren (200; 1500) .

2. Verfahren (300) nach Anspruch 1,

wobei die zugewiesenen Funkressourcen in Bezug auf mindestens eine von Zeit-, Frequenz- und Raumressourcen spezifiziert werden,
wobei die Mehrzahl von Vorrichtungen mindestens eines von einem Aktuator (506), der für drahtlose Kommunikation ausgelegt ist, einem Sensor (505), der für drahtlose Kommunikation ausgelegt ist, und einer programmierbaren logischen Steuerung (504) umfasst, die für drahtlose Kommunikation einer industriellen Automatisierungsanwendung ausgelegt ist.

3. Verfahren (300) nach einem der Ansprüche 1 und 2, wobei der Bedarf an Funkressourcen basierend auf der empfangenen Funkressourcenanforderung bestimmt wird und optional

wobei der Schritt (302; 304) des Bestimmens des Bedarfs an Funkressourcen oder Zuweisens der Funkressourcen zu der Mehrzahl von zweiten Funkkoordinatoren (200; 1500) ein Bestimmen einer Anzahl von Zeitschlitzen umfasst, die zur Verwendung durch einen bestimmten zweiten Funkkoordinator (200; 1500) in jedem Frequenzkanal zugelassen ist, basierend auf einer Latenzbeschränkung, die in der vom zweiten Funkkoordinator (200; 1500) empfangenen Funkressourcenanforderung angegeben ist.

4. Verfahren (300) nach einem der Ansprüche 1 bis 3, wobei der Schritt (302) des Bestimmens des Bedarfs an Funkressourcen ein Empfangen (802) einer Rückmeldungsinformation durch den ersten Funkkoordinator (100; 1400) von dem mindestens einen der Mehrzahl von zweiten Funkkoordinatoren (200; 1500) umfasst, wobei die Rückmeldungsinformation mindestens eines von einer Ressourcennutzung, einer Situation hinsichtlich spektraler Störungen und einem Zuverlässigkeitsindex der Vorrichtungen der assoziierten Vorrichtungsgruppe (507; 508) des mindestens einen der Mehrzahl von zweiten Funkkoordinatoren (200; 1500) angibt, wobei der Bedarf an Funkressourcen basierend auf der empfangenen Rückmeldungsinformation bestimmt wird.

5. Verfahren (300) nach einem der Ansprüche 1 bis 4, wobei der Schritt (304) des Zuweisens der Funkressourcen zu der Mehrzahl von zweiten Funkkoordinatoren (200; 1500) eine Prozedur maschinellen Lernens umfasst, die zum Bestimmen der Zuweisung von Funkressourcen verwendet wird.

6. Verfahren (300) nach Anspruch 5, wobei die Prozedur maschinellen Lernens einen genetischen Algorithmus (1300) umfasst oder darauf basiert, umfassend:

Erzeugen (1302) einer Mehrzahl von Mitgliedern einer Population, wobei jedes Mitglied einer Zuweisung der Funkressourcen zu jedem der Mehrzahl von zweiten Funkkoordinatoren (200; 1500) entspricht; und
Bewerten (1304) der Mitglieder basierend auf einer Fitnessfunktion, wobei die Fitnessfunktion die Funkressourcenzuweisung, die einem Mitglied der Population entspricht, optional basierend auf mindestens einer von Folgenden beurteilt:

(a) einer Metrik, die eine geringste Anzahl von Frequenzwechseln auf der Ebene des zweiten Funkkoordinators (200; 1500) begünstigt, und
(b) einer Metrik, die Funkressourcenzuweisungen begünstigt, die zu einer höheren Ressourcennutzung, weniger spektralen Störungen und/oder einem höheren Zuverlässigkeitsindex für die Kommunikation an der Mehrzahl von zweiten Funkkoordinatoren (200; 1500) führen.

7. Verfahren (300) nach einem der Ansprüche 1 bis 6,

wobei der Schritt (302) des Bestimmens des Bedarfs an Funkressourcen ein Bestimmen einer Anzahl von redundanten Funkressourcen, die für jeden der Mehrzahl von zweiten Funkkoordinatoren (200; 1500) benötigt wird, um eine Übertragungszuverlässigkeitsanforderung zu gewährleisten, für jeden der zweiten Funkkoordinatoren (200; 1500) umfasst, und/oder
das Verfahren (300) ferner den Schritt des Bestimmens (808, 810) basierend auf dem bestimmten Bedarf an Funkressourcen, wenn die Funkressourcen, die für den ersten Funkkoordinator (100; 1400) zur Zuweisung zu der Mehrzahl von zweiten Funkkoordinatoren (200; 1500) verfügbar sind, ausreichen, um ein Kriterium zu erfüllen, das eine Dienstqualitätsanforderung der Mehrzahl von Vorrichtungen angibt, und, wenn nicht, des Anforderns (818) von mehr Funkressourcen durch den ersten Funkkoordinator (100; 1400) von einem Spektrumverwaltungssystem umfasst oder auslöst.

8. Verfahren (400) zur Zuordnung von Funkressourcen in einem Funkzugangsnetzwerk zum Betreiben einer Mehrzahl von Vorrichtungen, umfassend die folgenden Schritte:

Senden (406; 708) einer Funkressourcenanforderung von einem zweiten Funkkoordinator (200; 1500) an einen ersten Funkkoordinator (100; 1400), wobei die Funkressourcenanforderung Funkressourcen angibt, die vom zweiten Funkkoordinator (200; 1500) zum Zuordnen der Funkressourcen zu Vorrichtungen seiner assoziierten Vorrichtungsgruppe (507; 508) benötigt werden;
Empfangen (408) einer Zuweisungsnachricht (120) vom ersten Funkkoordinator (100; 1400) am zweiten Funkkoordinator (200; 1500), wobei die Zuweisungsnachricht (120) die dem zweiten Funkkoordinator (200; 1500) zugewiesenen Funkressourcen angibt; und
Zuordnen (410) von Funkressourcen durch den zweiten Funkkoordinator (200; 1500) zu den Vorrichtungen seiner assoziierten Vorrichtungsgruppe (507; 508) basierend auf den Funkressourcen, die dem zweiten Funkkoordinator (200; 1500) gemäß der empfangenen Zuweisungsnachricht (120) zugewiesen wurden, wobei die Mehrzahl von Vorrichtungen in eine Mehrzahl von Vorrichtungsgruppen (507; 508) eingeteilt ist, wobei jede Vorrichtungsgruppe (507; 508) mit einem der Funkkoordinatoren (200; 1500) assoziiert ist, und wobei jede Vorrichtung der Mehrzahl von Vorrichtungsgruppen, die einer zeitkritischen industriellen Automatisierungsanwendung entspricht, mit demselben zweiten Funkkoordinator der zweiten Funkkoordinatoren (200; 1500) assoziiert ist.

9. Verfahren (400) nach Anspruch 8,

wobei der Schritt des Zuweisens der Funkressourcen ein Zuordnen mindestens eines von Zeitschlitzen und Frequenzkanälen und/oder räumlichen Funkressourcen zu den Vorrichtungen der assoziierten Vorrichtungsgruppe (507; 508) umfasst, und/oder
wobei die Mehrzahl von Vorrichtungen mindestens eines von einem Aktuator (506), der für drahtlose Kommunikation ausgelegt ist, einem Sensor (505), der für drahtlose Kommunikation ausgelegt ist, und einer programmierbaren logischen Steuerung (504) umfasst, die für drahtlose Kommunikation einer industriellen Automatisierungsanwendung ausgelegt ist, und/oder
wobei jede der Vorrichtungsgruppen (507, 508) einer lokalen Zelle (503) von Vorrichtungen entspricht, die einen oder mehrere industrielle Automatisierungsprozesse abdeckt.

10. Verfahren nach Anspruch 8 oder 9, ferner umfassend oder auslösend zumindest den Schritt des Bestimmens (704; 706) durch den zweiten Funkkoordinator (200; 1500), ob die Funkressourcen, die dem zweiten Funkkoordinator (200; 1500) zugewiesen werden, ausreichen, um eine Dienstqualitätsanforderung der Vorrichtungen seiner assoziierten Vorrichtungsgruppe (507; 508) zu erfüllen, und, wenn nicht, des Sendens (406; 708) der Funkressourcenanforderung.

11. Verfahren nach einem der Ansprüche 8 bis 10, ferner umfassend oder auslösend den folgenden Schritt:
Senden (406; 708) einer Rückmeldungsinformation vom ersten Funkkoordinator (200; 1500) an den zweiten Funkkoordinator (100; 1400), wobei die Rückmeldungsinformationen mindestens eines von einer Ressourcennutzung, einer Situation hinsichtlich spektraler Störungen und einem Zuverlässigkeitsindex der Vorrichtungen der assoziierten Vorrichtungsgruppe (507; 508) des zweiten Funkkoordinators (200; 1500) angibt.

12. Verfahren nach einem der Ansprüche 10 oder 11, ferner umfassend oder auslösend den folgenden Schritt:

Abrufen (402; 702) einer Informationen durch den zweiten Funkkoordinator (200; 1500) von den Vorrichtungen seiner assoziierten Vorrichtungsgruppe (507; 508), wobei die Information mindestens eines von einer Dienstqualitätsanforderung, einer Ressourcennutzung und einer Situation hinsichtlich spektraler Störungen der Vorrichtungen seiner assoziierten Vorrichtungsgruppe (507; 508) angibt; und
Bestimmen (404; 704, 706, 708) mindestens einer von der Funkressourcenanforderung und der Rückmeldungsinformation basierend auf der abgerufenen Information.

13. Verfahren nach einem der Ansprüche 8 bis 12, wobei der zweite Funkkoordinator (200; 1500) die Funkressourcen den Vorrichtungen seiner assoziierten Vorrichtungsgruppe (507; 508) auf einer Zeitskala zuordnet, die schneller als die Zeitskala ist, auf der der zweite Funkkoordinator (200; 1500) Zuweisungsnachrichten (120) vom ersten Funkkoordinator (100; 1400) empfängt.

14. Erster Funkkoordinator (100; 1400) zum Zuweisen von Funkressourcen in einem Funkzugangsnetzwerk zum Betreiben einer Mehrzahl von Vorrichtungen, konfiguriert zum Ausführen der folgenden Schritte:

Bestimmen eines Bedarfs an Funkressourcen für jeden einer Mehrzahl von zweiten Funkkoordinatoren (200; 1500) zum Zuordnen der Funkressourcen zu einer assoziierten Vorrichtungsgruppe (507; 508), wobei die Mehrzahl von Vorrichtungen in eine Mehrzahl von Vorrichtungsgruppen (507, 508) eingeteilt ist, wobei jede Vorrichtungsgruppe (507; 508) mit einem der Mehrzahl von zweiten Funkkoordinatoren (200; 1500) assoziiert ist, wobei jede Vorrichtung der Mehrzahl von Vorrichtungsgruppen, die einer zeitkritischen industriellen Automatisierungsanwendung entspricht, mit demselben zweiten Funkkoordinator der Mehrzahl von zweiten Funkkoordinatoren assoziiert ist, wobei der Schritt des Bestimmens des Bedarfs an Funkressourcen ein Empfangen einer Funkressourcenanforderung durch den ersten Koordinator (100; 1400) von mindestens einem der Mehrzahl von zweiten Funkkoordinatoren (200; 1500) umfasst, und wobei die Funkressourcenanforderung Funkressourcen angibt, die von dem mindestens einen der Mehrzahl von zweiten Funkkoordinatoren (200; 1500) zum Zuordnen der Funkressourcen zu seiner assoziierten Vorrichtungsgruppe (507; 508) benötigt werden;

Zuweisen der Funkressourcen zu jedem der Mehrzahl von zweiten Funkkoordinatoren (200; 1500) basierend auf dem bestimmten Bedarf an Funkressourcen; und

Senden einer Zuweisungsnachricht (120), die die zugewiesenen Funkressourcen angibt, an jeden der Mehrzahl von zweiten Funkkoordinatoren (200; 1500).

15. Erster Funkkoordinator (100; 1400) nach Anspruch 14, ferner konfiguriert zum Ausführen der Schritte nach einem der Ansprüche 2 bis 7.

16. Zweiter Funkkoordinator (200; 1500) zum Zuordnen von Funkressourcen in einem Funkzugangsnetzwerk zum Betreiben einer Mehrzahl von Vorrichtungen, der zum Ausführen der folgenden Schritte konfiguriert ist:

Senden einer Funkressourcenanforderung von dem zweiten Funkkoordinator (200; 1500) an einen ersten Funkkoordinator (100; 1400), wobei die Funkressourcenanforderung Funkressourcen angibt, die vom zweiten Funkkoordinator (200; 1500) zum Zuordnen von Funkressourcen zu Vorrichtungen seiner assoziierten Vorrichtungsgruppe (507; 508) benötigt werden;

Empfangen einer Zuweisungsnachricht (120) vom ersten Funkkoordinator (100; 1400), wobei die Zuweisungsnachricht (120) die dem zweiten Funkkoordinator (200; 1500) zugewiesenen Funkressourcen angibt; und

Zuordnen von Funkressourcen zu den Vorrichtungen seiner assoziierten Vorrichtungsgruppe (507; 508) basierend auf den Funkressourcen, die dem zweiten Funkkoordinator (200; 1500) gemäß der Zuweisungsnachricht (120) zugewiesen wurden, wobei die Mehrzahl von Vorrichtungen in eine Mehrzahl von Vorrichtungsgruppen (507; 508) eingeteilt ist, wobei jede Vorrichtungsgruppe (507; 508) mit einem der Funkkoordinatoren (200; 1500) assoziiert ist, und wobei jede Vorrichtung der Mehrzahl von Vorrichtungsgruppen, die einer zeitkritischen industriellen Automatisierungsanwendung entspricht, mit demselben zweiten Funkkoordinator der zweiten Funkkoordinatoren (200; 1500) assoziiert ist.

17. Zweiter Funkkoordinator (200; 1500) nach Anspruch 16, ferner konfiguriert zum Ausführen der Schritte nach einem der Ansprüche 9 bis 13.

## Revendications

1. Procédé (300) d'attribution de ressources radio dans un réseau d'accès radio pour faire fonctionner une pluralité de dispositifs, comprenant les étapes suivantes :

la détermination (302), par un premier coordinateur radio (100 ; 1400), d'un besoin de ressources radio pour chacun d'une pluralité de deuxièmes coordinateurs radio (200 ; 1500) pour assigner les ressources radio à un groupe de dispositifs (507 ; 508) associé, dans lequel la pluralité de dispositifs sont regroupés dans une pluralité de groupes de dispositifs (507 ; 508), chaque groupe de dispositifs (507 ; 508) étant associé à l'un de la pluralité de deuxièmes coordinateurs radio (200 ; 1500), dans lequel chaque dispositif de la pluralité de groupes de dispositifs correspondant à une application d'automatisation industrielle sensible au temps est associé à un deuxième coordinateur radio commun parmi la pluralité de deuxièmes coordinateurs radio, dans lequel l'étape de détermination du besoin de ressources radio comprend la réception (802), par le premier coordinateur radio (100 ; 1400), depuis au moins l'un de la pluralité de deuxièmes coordinateurs radio (200 ; 1500), d'une demande de ressources radio, dans lequel la demande de ressources radio est indicative de ressources radio requises par l'au moins un de la pluralité de deuxièmes coordinateurs radio (200 ; 1500) pour assigner les ressources radio à son groupe de dispositifs (507 ; 508) associé ;

l'attribution (304) des ressources radio à chacun de la pluralité de deuxièmes coordinateurs radio (200 ; 1500) par le premier coordinateur radio (100 ; 1400) sur la base du besoin déterminé de ressources radio ; et

l'envoi (306), à au moins l'un de la pluralité de deuxièmes coordinateurs radio (200 ; 1500), d'un message d'attribution (120) indicatif des ressources radio attribuées.

2. Procédure (300) selon la revendication 1,

dans lequel les ressources radio attribuées sont spécifiées en termes d'au moins l'un d'un temps, d'une fréquence et de ressources spatiales, et/ou

dans lequel la pluralité de dispositifs inclut au moins l'un d'un actionneur (506) configuré pour une communication sans fil, d'un capteur (505) configuré pour une communication sans fil et d'un automate programmable (504) configuré pour une communication sans fil d'une application d'automatisation industrielle.

3.  Procédé (300) selon la revendication 1 ou 2, dans lequel le besoin de ressources radio est déterminé sur la base de la demande de ressources radio reçue et, facultativement,
    dans lequel l'étape (302 ; 304) de détermination du besoin de ressources radio ou d'attribution de ressources radio à la pluralité de deuxièmes coordinateurs radio (200 ; 1500) comprend la détermination d'un nombre de créneaux de temps autorisés à être utilisés dans chaque canal de fréquence par un certain deuxième coordinateur radio (200 ; 1500) sur la base d'une contrainte de latence indiquée dans la demande de ressources radio reçue depuis ledit deuxième coordinateur radio (200 ; 1500).

4.  Procédé (300) selon l'une quelconque des revendications 1 à 3, dans lequel l'étape (302) de détermination du besoin de ressources radio comprend la réception (802), par le premier coordinateur radio (100 ; 1400), d'une information de rétroaction depuis l'au moins un de la pluralité de deuxièmes coordinateurs radio (200 ; 1500), l'information de rétroaction étant indicative d'au moins l'un d'une utilisation de ressources, d'une situation d'interférence spectrale et d'un indice de fiabilité des dispositifs du groupe de dispositifs (507 ; 508) associé de l'au moins un de la pluralité de deuxièmes coordinateurs radio (200 ; 1500), dans lequel le besoin de ressources radio est déterminé sur la base de l'information de rétroaction reçue.

5.  Procédé (300) selon l'une quelconque des revendications 1 à 4, dans lequel l'étape (304) d'attribution des ressources radio à la pluralité de deuxièmes coordinateurs radio (200 ; 1500) comprend une procédure d'apprentissage automatique utilisée pour déterminer l'attribution de ressources radio.

6.  Procédé (300) selon la revendication 5, dans lequel la procédure d'apprentissage automatique inclut ou est basée sur un algorithme génétique (1300), comprenant

    la génération (1302) d'une pluralité de membres d'une population, chaque membre correspondant à une attribution des ressources radio à chacun de la pluralité de deuxièmes coordinateurs radio (200 ; 1500) ; et
    l'évaluation (1304) des membres sur la base d'une fonction d'adaptation, la fonction d'adaptation estimant l'attribution de ressources radio correspondant à un membre de la population, facultativement sur la base d'au moins l'une parmi

    (a) une métrique qui favorise un nombre le plus petit de commutations de fréquences au niveau du deuxième coordinateur radio (200 ; 1500), et
    (b) une métrique qui favorise des attributions de ressources radio découlant d'une utilisation de ressources plus grande, d'interférences spectrales moindres et/ou d'un indice de fiabilité plus élevé pour la communication au niveau de la pluralité de deuxièmes coordinateurs radio (200 ; 1500).

7.  Procédé (300) selon l'une quelconque des revendications 1 à 6,

    dans lequel l'étape (302) de détermination du besoin de ressources radio comprend la détermination, pour chacun des deuxièmes coordinateurs radio (200 ; 1500), d'un nombre de ressources radio redondantes nécessaires pour chacun de la pluralité de deuxièmes coordinateurs radio (200 ; 1500) pour satisfaire une exigence de fiabilité de transmission, et/ou
    le procédé (300) en outre comprenant ou déclenchant l'étape de détermination (808, 810) sur la base du besoin déterminé de ressources radio, si les ressources radio disponibles au premier coordinateur radio (100 ; 1400) pour leur attribution à la pluralité de deuxièmes coordinateurs radio (200 ; 1500) sont suffisantes pour remplir un critère indicatif d'une exigence de qualité de service de la pluralité de dispositifs et, si tel n'est pas le cas, la demande (818), par le premier coordinateur radio (100 ; 1400), de davantage de ressources radio à un système de gestion de spectre.

8.  Procédé (400) d'assignation de ressources radio dans un réseau d'accès radio pour faire fonctionner une pluralité de dispositifs, comprenant les étapes suivantes :

    l'envoi (406 ; 708), depuis un deuxième coordinateur radio (200 ; 1500) à un premier coordinateur radio (100 ; 1400), d'une demande de ressources radio, la demande de ressources radio étant indicative de ressources radio requises par le deuxième coordinateur radio (200 ; 1500) pour assigner les ressources radio à des dispositifs de son groupe de dispositifs (507 ; 508) associé ;
    la réception (408), au niveau du deuxième coordinateur radio (200 ; 1500), d'un message d'attribution (120) depuis le premier coordinateur radio (100 ; 1400), le message d'attribution (120) étant indicatif des ressources radio attribuées au deuxième coordinateur radio (200 ; 1500) ; et

l'assignation (410), par ledit deuxième coordinateur radio (200 ; 1500), de ressources radio aux dispositifs de son groupe de dispositifs (507 ; 508) associé sur la base des ressources radio attribuées audit deuxième coordinateur radio (200 ; 1500) en fonction du message d'attribution (120) reçu, dans lequel la pluralité de dispositifs sont regroupés dans une pluralité de groupes de dispositifs (507 ; 508), chaque groupe de dispositifs (507 ; 508) étant associé à l'un des deuxièmes coordinateurs radio (200 ; 1500), et dans lequel chaque dispositif de la pluralité de groupes de dispositifs correspondant à une application d'automatisation industrielle sensible au temps est associé au même deuxième coordinateur radio parmi les deuxièmes coordinateurs radio (200 ; 1500).

9. Procédé (400) selon la revendication 8,

dans lequel ladite étape d'attribution des ressources radio comprend l'assignation d'au moins l'un de créneaux de temps et de canaux de fréquence et/ou de ressources radio spatiales aux dispositifs du groupe de dispositifs (507 ; 508) associé, et/ou

dans lequel la pluralité de dispositifs inclut au moins l'un d'un actionneur (506) configuré pour une communication sans fil, d'un capteur (505) configuré pour une communication sans fil et d'un automate programmable (504) configuré pour une communication sans fil d'une application d'automatisation industrielle, et/ou

dans lequel chacun des groupes de dispositifs (507, 508) correspond à une cellule locale (503) de dispositifs qui couvrent un ou plusieurs processus d'automatisation industrielle.

10. Procédé selon la revendication 8 ou 9, en outre comprenant ou déclenchant au moins l'étape de détermination (704 ; 706), par le deuxième coordinateur radio (200 ; 1500), si les ressources radio attribuées au deuxième coordinateur radio (200 ; 1500) sont suffisantes pour satisfaire une exigence de qualité de service des dispositifs de son groupe de dispositifs (507 ; 508) associé et, si tel n'est pas le cas, l'envoi (406 ; 708) de la demande de ressources radio.

11. Procédé selon l'une quelconque des revendications 8 à 10, en outre comprenant ou déclenchant l'étape suivante : l'envoi (406 ; 708), depuis le deuxième coordinateur radio (200 ; 1500) au premier coordinateur radio (100 ; 1400), d'une information de rétroaction, l'information de rétroaction étant indicative d'au moins l'un d'une utilisation de ressources, d'une situation d'interférence spectrale et d'un indice de fiabilité des dispositifs du groupe de dispositifs (507 ; 508) associé du deuxième coordinateur radio (200 ; 1500).

12. Procédé selon la revendication 10 ou 11, en outre comprenant ou déclenchant l'étape suivante :

la récupération (402 ; 702), par le deuxième coordinateur radio (200 ; 1500), d'une information depuis des dispositifs de son groupe de dispositifs (507 ; 508) associé, dans lequel l'information est indicative d'au moins l'une d'une exigence de qualité de service, d'une utilisation de ressources et d'une situation d'interférence spectrale des dispositifs de son groupe de dispositifs (507 ; 508) associé ; et

la détermination (404 ; 704, 706, 708) d'au moins l'une de la demande de ressources radio et de l'information de rétroaction sur la base de l'information récupérée.

13. Procédé selon l'une quelconque des revendications 8 à 12, dans lequel le deuxième coordinateur radio (200 ; 1500) assigne les ressources radio aux dispositifs de son groupe de dispositifs (507 ; 508) associé dans une échelle de temps plus rapide que l'échelle de temps dans laquelle le deuxième coordinateur radio (200 ; 1500) reçoit des messages d'attribution (120) depuis le premier coordinateur radio (100 ; 1400).

14. Premier coordinateur radio (100 ; 1400) pour l'attribution de ressources radio dans un réseau d'accès radio pour faire fonctionner une pluralité de dispositifs, configuré pour réaliser les étapes suivantes :

la détermination d'un besoin de ressources radio pour chacun d'une pluralité de deuxièmes coordinateurs radio (200 ; 1500) pour assigner les ressources radio à un groupe de dispositifs (507 ; 508) associé, dans lequel la pluralité de dispositifs sont regroupés dans une pluralité de groupes de dispositifs (507 ; 508), chaque groupe de dispositifs (507 ; 508) étant associé à l'un de la pluralité de deuxièmes coordinateurs radio (200 ; 1500), dans lequel chaque dispositif de la pluralité de groupes de dispositifs correspondant à une application d'automatisation industrielle sensible au temps est associé au même deuxième coordinateur radio parmi la pluralité de deuxièmes coordinateurs radio, dans lequel l'étape de détermination du besoin de ressources radio comprend la réception, par le premier coordinateur radio (100 ; 1400), depuis au moins l'un de la pluralité de deuxièmes coordinateurs radio (200 ; 1500), d'une demande de ressources radio, et dans lequel la demande de ressources radio est indicative de ressources radio requises par l'au moins un de la pluralité de deuxièmes coordinateurs radio (200 ; 1500) pour assigner les ressources radio à son groupe de dispositifs (507 ; 508) associé ; l'attribution des ressources radio à chacun de la pluralité de deuxièmes coordinateurs radio (200 ; 1500) sur la base du besoin déterminé de ressources radio ; et l'envoi, à chacun de la pluralité de deuxièmes coordinateurs radio (200 ; 1500), d'un message d'attribution (120) indicatif des ressources radio attribuées.

**15.** Premier coordinateur radio (100 ; 1400) selon la revendication 14, configuré en outre pour réaliser les étapes selon l'une quelconque des revendications 2 à 7.

**16.** Deuxième coordinateur radio (200 ; 1500) pour l'assignation de ressources radio dans un réseau d'accès radio pour faire fonctionner une pluralité de dispositifs, configuré pour réaliser les étapes suivantes :

l'envoi, depuis un deuxième coordinateur radio (200 ; 1500) à un premier coordinateur radio (100 ; 1400), d'une demande de ressources radio, la demande de ressources radio étant indicative de ressources radio requises par le deuxième coordinateur radio (200 ; 1500) pour assigner des ressources radio à des dispositifs de son groupe de dispositifs (507 ; 508) associé ;

la réception d'un message d'attribution (120) depuis le premier coordinateur radio (100 ; 1400), le message d'attribution (120) étant indicatif des ressources radio attribuées au deuxième coordinateur radio (200 ; 1500) ; et l'assignation de ressources radio aux dispositifs de son groupe de dispositifs (507 ; 508) associé sur la base des ressources radio attribuées audit deuxième coordinateur radio (200 ; 1500) en fonction du message d'attribution (120), dans lequel la pluralité de dispositifs sont regroupés dans une pluralité de groupes de dispositifs (507 ; 508), chaque groupe de dispositifs (507 ; 508) étant associé à l'un des deuxièmes coordinateurs radio (200 ; 1500), et dans lequel chaque dispositif de la pluralité de groupes de dispositifs correspondant à une application d'automatisation industrielle sensible au temps est associé au même deuxième coordinateur radio parmi les deuxièmes coordinateurs radio (200 ; 1500).

**17.** Deuxième coordinateur radio (200 ; 1500) selon la revendication 16, configuré en outre pour réaliser les étapes selon l'une quelconque des revendications 9 à 13.

100

```
┌─────────────────────────────────────────┐
│  ┌─────────────────────────────────────┐ │
│  ┊        Receiving Module             ┊ ├──── 102
│  └─────────────────────────────────────┘ │
│  ┌─────────────────────────────────────┐ │
│  │       Determination Module          │ ├──── 104
│  └─────────────────────────────────────┘ │
│  ┌─────────────────────────────────────┐ │
│  │         Allocation Module           │ ├──── 106
│  └─────────────────────────────────────┘ │
│  ┌─────────────────────────────────────┐ │
│  │          Sending Module             │ ├──── 108
│  └─────────────────────────────────────┘ │
└─────────────────────────────────────────┘
```

**Fig. 1**

200

```
┌─────────────────────────────────────────┐
│  ┌─────────────────────────────────────┐ │
│  ┊        Retrieving Module            ┊ ├──── 202
│  └─────────────────────────────────────┘ │
│  ┌─────────────────────────────────────┐ │
│  ┊       Determination Module          ┊ ├──── 204
│  └─────────────────────────────────────┘ │
│  ┌─────────────────────────────────────┐ │
│  ┊         Sending Module              ┊ ├──── 206
│  └─────────────────────────────────────┘ │
│  ┌─────────────────────────────────────┐ │
│  │         Receiving Module            │ ├──── 208
│  └─────────────────────────────────────┘ │
│  ┌─────────────────────────────────────┐ │
│  │        Assignment Module            │ ├──── 210
│  └─────────────────────────────────────┘ │
└─────────────────────────────────────────┘
```

**Fig. 2**

300

Determine a need for radio resources for each of a plurality of second radio coordinators ——— 302

Allocate the radio resources to each of the plurality of second radio coordinators based on the determined need for radio resources ——— 304

Send, to at least one of the plurality of second radio coordinators, an allocation message indicative of the allocated radio resources ——— 306

**Fig. 3**

400

Retrieve an information from the devices of an associated device group, wherein the information is indicative of at least one of a quality of service requirement, a resource utilization and a spectral interference situation of the devices — 402

Determine at least one of the radio resource request and the feedback information based on the retrieved information — 404

Send, to a first radio coordinator, a radio resource request and/or a feedback information — 406

Receive an allocation message from the first radio coordinator — 408

Assign radio resources to the devices of the associated device group based on the radio resources allocated according to the received allocation message — 410

**Fig. 4**

**Fig. 5**

**Fig. 6**

Start

702 — Gather QoS requirements and
feedback on resource utilization ← — 402

704 — Evaluate current resource
assignment to devices

706
Continue using the current    Yes    Resource
resource allocation    ←    allocation    404
suffices

714    No

Create new resource request and
current resource utilization    406
708 — report, and send to GRC

710
No    New resource
allocation from    408
GRC?

Yes

712    Assign resources to devices    410

**Fig. 7**

**Fig. 8**

F1,T1  F1,T2  F1,T3
F2,T1  F2,T2  F2,T3

**Fig. 9A**

f1 111 112 112 112 121 121 121
f2 222 122 212 221 122 212 221

f1 122 122 122 211 211 211 221
f2 112 121 211 122 212 221 112

f1 212 212 221 221 221 222
f2 121 211 112 121 211 111

**Fig. 9B**

f1 111 112 112 112 121 121 121
f2 222 122 212 221 122 212 221

f1 122 122 122 211 211 211 221
f2 112 121 211 122 212 221 112

f1 212 212 221 221 221 222
f2 121 211 112 121 211 111

**Fig. 9C**

**Fig. 10A**

**Fig. 10B**

**Fig. 10C**

220

**Fig. 11**

120

Id, t, f, s

**Fig. 12A**

f1: 1,1,2,2,1,...
f2: 2,2,1,1,3,...
f3: 3,3,3,3,1,...

**Fig. 12B**

{1,2,1,54}, {1,2,2,60}, {1,1,1,20}
{2,2,2,60}, {2,2,1,70}, {2,1,3,30}
{3,4,3,20}, {3,1,1,90}

**Fig. 12C**

1300

Initialize population —— 1302

Evaluation fitness —— 1304

Constraint satisfied? —— 1306

Yes

No —— 1308

Select survivors

Randomly vary individuals —— 1310

Output results —— 1312

**Fig. 13**

1400

Interface — 1402

Processor(s) — 1404

Memory — 1406

First Radio Coordinator

**Fig. 14**

1500

Interface — 1502

Processor(s) — 1504

Memory — 1506

Second Radio Coordinator

**Fig. 15**

**REFERENCES CITED IN THE DESCRIPTION**

**Patent documents cited in the description**

- US 20110070838 A1
- US 20130194950 A1
- US 20100202391 A1